# EUROPEAN PATENT SPECIFICATION

(11) **EP 4 276 797 B1**
(45) Date of publication and mention of the grant of the patent: **05.11.2025**
(21) Application number: 22898749.1
(22) Date of filing: 19.07.2022
(51) Int. Cl.: G09B 9/00, G09B 19/24, G09B 5/02, H01M 4/04, B01F 35/22, B01F 33/84, G06F 30/27

(54) **MIXER SIMULATION DEVICE AND METHOD FOR SECONDARY BATTERY PRODUCTION**
MISCHERSIMULATIONSVORRICHTUNG UND VERFAHREN ZUR HERSTELLUNG EINER SEKUNDÄRBATTERIE
DISPOSITIF DE SIMULATION DE MÉLANGEUR ET PROCÉDÉ DE PRODUCTION DE BATTERIES SECONDAIRES

(30) Priority: 26.11.2021 KR 20210165237
(43) Date of publication of application: 15.11.2023
(73) Proprietor: LG Energy Solution, Ltd., Seoul 07335 (KR)
(72) Inventor: CHO, Sung Nam, Daejeon 34122 (KR); KANG, Shinkyu, Daejeon 34122 (KR); KIM, Nam Hyuck, Daejeon 34122 (KR); KIM, Youngduk, Daejeon 34122 (KR); JEON, Su Ho, Daejeon 34122 (KR)
(74) Representative: BCKIP Part mbB
(86) International application number: PCT/KR2022/010494
(87) International publication number: WO 2023/096064

(56) References cited:
- WO-A1-93/08552
- CN-A- 107 103 811
- CN-A- 107 103 811
- CN-U- 214 671 372
- JP-A- 2010 231 792
- JP-A- 2010 231 792
- KR-A- 20180 073 116
- KR-A- 20180 073 116
- US-A1- 2015 032 497

## Description

### Technical Field

The present invention relates to a mixer simulation device and a simulation method of mixer for secondary battery production for training secondary battery production workers.

### Background Art

Due to the recent growth of the electric vehicle market, the demand for developing and producing secondary batteries is rapidly increasing. The number of production plants for secondary battery production is also growing in response to the increase in demand for secondary batteries. However, the industry is experiencing a significant shortage of skilled workers for operating secondary battery production plants.

Meanwhile, in the past, training and education of new workers were carried out in such a way of learning a skill by watching experienced workers, but it became difficult to train and educate new workers for a long time due to the busy production schedule of secondary batteries. In addition, it is difficult to find a sufficient number of skilled workers due to the frequent resignation of workers. In addition, even if a worker is trained in a general method of operating a factory, it is not easy for the worker to immediately respond to various troubleshooting situations that may occur during factory operation.

KR 20180073116 A discloses an apparatus for generating virtual FINEX process which includes: a process design configuration manager for generating a plurality of experimental conditions from a FINEX process condition and generating a priority value for the plurality of experimental conditions by respectively proceeding virtual experiments for the test conditions; and a simulator configuration manager for generating a virtual FINEX process according to a selected experimental condition among the plurality of experimental conditions.

CN 107103811 A discloses a virtual detection teaching platform with industrial ultrathin material production detection equipment and a use method thereof. The platform comprises a virtual simulation laboratory three-dimensional environment module, a virtual simulation laboratory entity detection device, a virtual simulation laboratory three-dimensional simulation detection device, a virtual detection data module and a virtual detection software program. The use method comprises getting access to content in the catalogue of a virtual detection simulation laboratory; getting access to content in the catalogue of an entity detection device display area; getting access to content in the catalogue of a virtual detection display area; getting access to content in the catalogue of a virtual software display area; and providing the guidance of eight experiments by using a website experimental handout. The platform combines an actual industrial production line and detection equipment, virtual dynamic simulation production line and detection equipment and the application software of the detection equipment so as to provide students with empathy during the operation and improve the students' abilities to linking theory with practice.

CN 214671372 U discloses an automatic control practical training platform comprising a transparent packaging cavity with an opening in the top end and a filling cavity fixedly arranged on the outer side of the transparent packaging cavity. A rotating plate is arranged above the transparent packaging cavity, a driving pair is fixedly arranged at the top end of the rotating plate through a supporting column, and the output end of the bottom of the driving pair penetrates through the rotating plate. And side rotating sleeves are fixedly arranged on the two sides of the rotating plate, upper rotating sleeves are rotationally connected into the side rotating sleeves, rotating rollers are fixedly arranged at the bottom ends of the upper rotating sleeves, the output end of the second electric telescopic rod penetrates through the filling cavity, and the extending end of the second electric telescopic rod is fixedly connected with the piston sliding piece. Here, a rotary electrode slice winding structure is adopted, the first electric telescopic rod drives the winding drum and the two electrode slices to enter the transparent packaging cavity for observation simulation, and the filling liquid is adopted to extrude the simulation structure, so that a lithium battery manufacturing process is conveniently simulated, and the internal layered structure of the lithium battery is conveniently displayed.

JP 2010-231792 A discloses a training system of a semiconductor manufacturing device, which efficiently implements training of a user for the semiconductor manufacturing device. A device training server is connected to a user terminal through a circuit. In the device training server a program storage means stores a program for simulation of the semiconductor manufacturing device. A condition data reception means receives condition data on the simulation on the semiconductor manufacturing device received from the user by the user terminal and transmitted through the circuit. A program execution means executes the program stored in the program storage means based on the received condition data. A result data transmission means transmits result data of the simulation performed by the executed program to the user terminal through the circuit.

### DESCRIPTION OF THE INVENTION

### TECHNICAL OBJECTIVES

The object of the present invention is to provide a mixer simulation device and a simulation method of mixer for secondary battery production as well as a computer program stored in a computer-readable medium, and a computer-readable medium storing the computer program to improve the production of secondary batteries and to reduce the loss due to the occurrence of defects. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "... aspect according to an example", "the disclosure describes", or "the disclosure" describe technical teaching which relates to the understanding of the invention or its embodiments, which, however, is not claimed as such.

### TECHNICAL MEANS

The present disclosure may be implemented in various ways including a device and method as well as a computer program stored in a computer-readable medium.

A simulation apparatus for secondary battery production according to the present invention includes: a memory configured to store at least one instruction; and at least one processor configured to execute at least one instruction stored in the memory. The at least one instruction includes instructions for: executing an apparatus operating unit including a mixer model apparatus related to secondary battery production; executing a facility operating unit including a plurality of adjustment parameters for determining operation of the mixer model apparatus and quality information related to a quality of a material produced by the mixer model apparatus; obtaining at least one of first user condition information or first user action information input through at least one of the facility operating unit or the mixer model apparatus; determining an operation of the mixer model apparatus based on at least one of the obtained first user condition information or first user action information; and executing an operation of measuring, mixing, and transferring a plurality of raw materials related to the mixer model apparatus based on the determined operation. The mixer model apparatus is a virtual mixer model apparatus.

According to an embodiment, the at least one instruction may further include instructions for executing a training scenario based on an operation process of the mixer model apparatus, and displaying guide information for manipulating the facility operating unit according to the training scenario.

According to an embodiment, the training scenario may include at least one of a raw material name and setting value input training, an insulation liquid setting training, a binder solution setting training, a pre-dispersion solution setting training, a slurry setting training, a tank cleaning training, or a troubleshooting training.

According to an embodiment, the insulation liquid setting training may include at least one of a detail training for semi-automatic setting of an insulation liquid, a detail training for semi-automatic mixing of an insulation liquid, a detail training for automatic mixing of an insulation liquid, or a detail training for transferring an insulation liquid.

According to an embodiment, the binder solution setting training may include at least one of a detail training for semi-automatic setting of a binder solution, a detail training for semi-automatic mixing of a binder solution, a detail training for automatic mixing of a binder solution, or a detail training for transferring a binder solution.

According to an embodiment, the pre-dispersion solution setting training may include at least one of a detail training for semi-automatic setting of a pre-dispersion solution, a detail training for semi-automatic mixing of a pre-dispersion solution, a detail training for automatic mixing of a pre-dispersion solution, or a detail training for transferring a pre-dispersion solution.

According to an embodiment, the slurry setting training may include at least one of a detail training for semi-automatic setting of a slurry, a detail training for semi-automatic mixing a slurry, a detail training for automatic mixing of a slurry, or a detail training for transferring a slurry.

According to an embodiment, the tank cleaning training may include at least one of a detail training for inputting setting values or a detail training for semi-automatic cleaning.

According to an embodiment, the troubleshooting training may include at least one of a valve alarm scenario, an overflow scenario, a binder solution exchange scenario, a slurry transfer scenario, an active material type exchange scenario, a setting value check scenario, a main mixer overheating scenario, or a pipe clogging scenario.

According to an embodiment, the at least one instruction may further include instructions for executing at least one trouble scenario of the valve alarm scenario, the overflow scenario, the binder solution exchange scenario, the slurry transfer scenario, the active material type exchange scenario, the setting value check scenario, the main mixer overheating scenario, and the pipe clogging scenario, changing at least partial area of the mixer model apparatus and the facility operating unit to an abnormal range based on the executed trouble scenario; obtaining at least one of second user action information or second user condition information through at least one of the mixer model apparatus or the facility operating unit; and changing at least one of the mixer model apparatus and the facility operating unit, having been changed to the abnormal range, to a normal range based on at least one of the obtained second user action information or second user condition information.

A simulation method of mixer for secondary battery production according to the present invention, performed by at least one processor, includes: executing an apparatus operating unit including a mixer model apparatus related to secondary battery production; executing a facility operating unit including a plurality of adjustment parameters for determining operation of the mixer model apparatus and quality information related to a quality of a material produced by the mixer model apparatus; obtaining at least one of first user condition information or first user action information input through at least one of the facility operating unit or the mixer model apparatus; determining an operation of the mixer model apparatus based on at least one of the obtained first user condition information or first user action information; and executing an operation of measuring, mixing, and transferring a plurality of raw materials related to the mixer model apparatus based on the determined operation.

According to an embodiment, the method may further include: executing a training scenario based on an operation process of the mixer model apparatus, and displaying guide information for manipulating the facility operating unit according to the training scenario.

According to an embodiment, the training scenario may include at least one of a raw material name and setting value input training, an insulation liquid setting training, a binder solution setting training, a pre-dispersion solution setting training, a slurry setting training, a tank cleaning training, or a troubleshooting training.

According to a not claimed embodiment, the insulation liquid setting training may include at least one of a detail training for semi-automatic setting of an insulation liquid, a detail training for semi-automatic mixing of an insulation liquid, a detail training for automatic mixing of an insulation liquid, or a detail training for transferring an insulation liquid.

According to a not claimed embodiment, the binder solution setting training may include at least one of a detail training for semi-automatic setting of a binder solution, a detail training for semi-automatic mixing of a binder solution, a detail training for automatic mixing of a binder solution, or a detail training for transferring a binder solution.

According to a not claimed embodiment, the pre-dispersion solution setting training may include at least one of a detail training for semi-automatic setting of a pre-dispersion solution, a detail training for semi-automatic mixing of a pre-dispersion solution, a detail training for automatic mixing of a pre-dispersion solution, or a detail training for transferring a pre-dispersion solution.

According to a not claimed embodiment, the slurry setting training may include at least one of a detail training for semi-automatic setting of a slurry, a detail training for semi-automatic mixing a slurry, a detail training for automatic mixing of a slurry, or a detail training for transferring a slurry.

According to a not claimed embodiment, the tank cleaning training may include at least one of a detail training for inputting setting values or a detail training for semi-automatic cleaning.

According to an embodiment, the trouble scenario may include at least one of a valve alarm scenario, an overflow scenario, a binder solution exchange scenario, a slurry transfer scenario, an active material type exchange scenario, a setting value check scenario, a main mixer overheating scenario, or a pipe clogging scenario.

According to a not claimed embodiment, the simulation method may further include instructions for executing at least one trouble scenario of the valve alarm scenario, the overflow scenario, the binder solution exchange scenario, the slurry transfer scenario, the active material type exchange scenario, the setting value check scenario, the main mixer overheating scenario, and the pipe clogging scenario, changing at least partial area of the mixer model apparatus and the facility operating unit to an abnormal range based on the executed trouble scenario; obtaining at least one of second user action information or second user condition information through at least one of the mixer model apparatus or the facility operating unit; and changing at least one of the mixer model apparatus or the facility operating unit, having been changed to the abnormal range, to a normal range based on at least one of the obtained second user action information or second user condition information.
The invention also provides a computer program stored in a computer-readable medium is provided to execute the method according to an embodiment of the present disclosure on a computer.
In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### EFFECTS OF THE INVENTION

In various embodiments of the present disclosure, a user performing secondary battery production may perform training related to a method of operating a secondary battery production equipment, a method of handling a defect situation, and so on through a simulation apparatus before being put into work; through training of the user, the loss due to the occurrence of defect may be considerably reduced so that the efficiency of the secondary battery production task may be improved effectively.

In various embodiments of the present disclosure, by generating a trouble scenario based on error information in an actual apparatus, the simulation apparatus may effectively generate training contents optimized for actual work environments.

In various embodiments of the present disclosure, a user may easily learn how to operate a secondary battery production equipment through the simulation progressed step by step according to the user's task skill level.

In various embodiments of the present disclosure, a user may easily identify and process a scenario for which the user lacks training; thus, the user may be trained only in the scenario for which the user has low work skills.

In various embodiments of the present disclosure, a user may effectively improve the ability to respond to des by training using a trouble scenario generated based on a malfunction occurring in an actual work environment.

The technical effects of the present disclosure are not limited to the technical effects described above, and other technical effects not mentioned herein may be understood clearly by those with ordinary knowledge in the art (referred to as a "person with ordinary skills") to which the present disclosure belongs from the appended claims.

### Brief description of the drawings

Embodiments of the present disclosure will be described with reference to the accompanying drawings described below, wherein similar reference numbers denote similar constituting elements, but the present disclosure is not limited thereto.
FIG. 1 illustrates an example in which a user uses a simulation apparatus according to an embodiment of the present disclosure.
FIG. 2 is a functional diagram illustrating an internal structure of a simulation apparatus according to an embodiment of the present disclosure.
FIG. 3 is a block diagram illustrating an example in which a simulation apparatus operates according to an embodiment of the present disclosure.
FIG. 4 illustrates an example of a display screen displayed or output on an apparatus operating unit according to an embodiment of the present disclosure.
FIG. 5 illustrates an example of a display screen displayed or output on a manual display unit according to an embodiment of the present disclosure.
FIG. 6 illustrates an example of a display screen displayed or output on a facility operating unit related to a mixer apparatus according to an embodiment of the present disclosure.
FIG. 7 illustrates an example of a display screen displayed or output on a facility operating unit related to a mixer apparatus according to another embodiment of the present disclosure.
FIG. 8 illustrates an example of a display screen displayed or output on a facility operating unit related to a mixer apparatus according to yet another embodiment of the present disclosure.
FIG. 9 illustrates an example in which a valve alarm scenario has occurred according to an embodiment of the present disclosure.
FIG. 10 illustrates an example of a mixer simulation method for secondary battery production according to an embodiment of the present disclosure.
FIG. 11 illustrates an exemplary computing device for performing the method and/or embodiments.

### [Description of Reference numeral]

100: Simulation apparatus
110: User
120: Manual display unit
130: Facility operating unit
140: Apparatus operating unit

### MODES FOR IMPLEMENTING THE INVENTION

Hereinafter, embodiments of the present invention will be described in detail with reference to the appended drawings.

In the accompanying drawings, identical or corresponding constituting elements are assigned the same reference numbers. In addition, overlapping descriptions of the same or corresponding constituting elements may be omitted in the description of the embodiments below. However, even if descriptions regarding a constituting element are omitted, it should not be interpreted that the constituting element is not included in the corresponding embodiment.

The advantages and features of the present disclosure, and a method of achieving them will be clearly understood with reference to the embodiments described together with appended drawings.

Terms used in the present disclosure will be briefly defined, and disclosed embodiments will be described in detail. Terms used in the present disclosure have been selected as much as possible from general terms relevant to the functions of the present disclosure and currently in wide use; however, the selection of terms may be varied depending on the intention of those persons skilled in the corresponding field, precedents, or emergence of new technologies. In addition, in a particular case, some terms may be selected arbitrarily by the applicant, and in such a case, detailed definitions of the terms will be provided in the corresponding description of the present disclosure. Therefore, the terms used in the present disclosure should be defined not simply by their apparent name but based on their meaning and context throughout the present disclosure.

In the present disclosure, a singular expression should be understood to include a plural expression unless the context explicitly indicates a singular expression. In addition, a plural expression should be understood to include a singular expression unless the context explicitly indicates a plural expression. Throughout the disclosure, unless otherwise explicitly stated, if a particular element is said to include some particular element, it means that the former may further include other particular elements rather than exclude them.

The term "comprises (includes)" and/or "comprising (including)" used in the present disclosure indicates the existence of features, steps, operations, components, and/or constituting elements; however, the term does not exclude addition of one or more other functions, steps, operations, components, constituting elements, and/or a combination thereof.

In the present disclosure, when a particular constituting element is referred to as being "coupled to," "combined with," "connected to," "related to," or as "responding to" any other constituting element, the particular constituting element may be directly coupled to, combined with, connected to, and/or related to, or may directly respond to the other constituting element; however, the present disclosure is not limited to the relationship. For example, there may be one or more intermediate constituting elements between a particular constituting element and another constituting element. In addition, in the present disclosure, "and/or" may include one or more of the listed items or a combination of at least a portion of one or more of the listed items.

In the present disclosure, the terms such as "first" and "second" are introduced to distinguish one constituting element from the others, and thus the constituting element should not be limited by those terms. For example, a "first" constituting element may be used to indicate a constituting element in a form similar to or the same as a "second" constituting element.

In the present disclosure, a "secondary battery" may refer to the battery made using a material in which the redox process between a current and the material may be repeated several times. For example, to produce a secondary battery, processing such as mixing, coating, roll pressing, slitting, notching and drying, lamination, folding and stacking, lamination and stacking, packaging, charging and discharging, degassing, double side folding, and characteristic inspection may be performed. In such a case, separate production equipment (apparatus) for performing each process may be used. At this time, each production equipment may be operated according to adjustment parameters and configuration values set or changed by a user.

In the present disclosure, a "user" may refer to a worker who performs secondary battery production and operates secondary battery production equipment and may include a user training through a simulation apparatus for secondary battery production equipment. In addition, a "user account" is an ID created to use the simulation apparatus or assigned to each user; the user may log into the simulation apparatus using the user account and perform a simulation, but the present disclosure is not limited thereto.

In the present disclosure, the "facility operating unit," "apparatus operating unit," and "quality checking unit" are software programs included in the simulation apparatus or displayed on an input/output device related to the simulation apparatus and/or an input/output device and may refer to a device and/or a program outputting an image or a video of a model apparatus or receiving various inputs from a user and delivering the received inputs to the simulation apparatus. The facility operating unit and the quality verification unit may be configured separately, or one of the facility operating unit and the quality verification unit may include both functions.

In the present disclosure, the "model apparatus" is a virtual apparatus that implements actual secondary battery production equipment into a 3D or 2D model, which may operate in a way that images, videos, or animations of the model apparatus are executed, modified, and/or corrected based on the information input by a user. In other words, the "operation of the model apparatus" may include images, videos, and animations of a model apparatus executed, modified, and/or corrected. For example, the model apparatus may include apparatus for performing each of mixing, coating, roll pressing, slitting, notching and drying, lamination, folding and stacking, lamination and stacking, packaging, charging/discharging, degassing, double side folding, characteristic inspection, and the like.

In the present disclosure, "user condition information" may include a user input that sets or modifies at least part of conditions and/or values among adjustment parameters of the facility operating unit or may correspond to the information generated by an arbitrary algorithm predetermined based on the corresponding user input.

In the present disclosure, "user action information" may include a user input such as a touch input, a drag input, a pinch input, and a rotation input performed on at least part of the model apparatus and/or the facility operating unit or may correspond to the information generated by an arbitrary algorithm predetermined based on the corresponding user input.

In the present disclosure, a "trouble scenario" may be a scenario that includes values, conditions, and the like for changing the operation of the model apparatus into a malfunction range or for changing quality information of a material determined by the operation of the model apparatus into a defect range. For example, when a trouble scenario occurs during the operation of the simulation apparatus, the operation or quality information of the model apparatus may be changed based on the generated trouble scenario. In addition, when the operation of the model apparatus or quality information changed by the trouble scenario is corrected to lie within a normal range, it may be determined that the corresponding trouble scenario has been resolved. For example, if the secondary battery production equipment is a mixer, the trouble scenario may include a valve alarm scenario, an overflow scenario, a binder solution exchange scenario, a slurry transfer scenario, an active material type exchange scenario, a setting value check scenario, a main mixer overheating scenario, and a pipe clogging scenario, and the like.

In the present disclosure, the "training scenario" may include a scenario for operating secondary battery production equipment. Each training scenario may include a plurality of detail trainings. For example, suppose the secondary battery production equipment is a mixer; in that case, the training scenario may include a raw material name and setting value input training, an insulation liquid setting training, a binder solution setting training, a pre-dispersion solution setting training, a slurry setting training, a tank cleaning training, and the like. The insulation liquid setting training may include a detail training for semi-automatic setting of an insulation liquid, a detail training for semi-automatic mixing of an insulation liquid, a detail training for automatic mixing of an insulation liquid, a detail training for transferring an insulation liquid, and the like. The binder solution setting training may include a detail training for semi-automatic setting of a binder solution, a detail training for semi-automatic mixing of a binder solution, a detail training for automatic mixing of a binder solution, a detail training for transferring a binder solution, and the like. The pre-dispersion solution setting training may include a detail training for semi-automatic setting of a pre-dispersion solution, a detail training for semi-automatic mixing of a pre-dispersion solution, a detail training for automatic mixing of a pre-dispersion solution, a detail training for transferring a pre-dispersion solution, and the like. The slurry setting training may include a detail training for semi-automatic setting of a slurry, a detail training for semi-automatic mixing a slurry, a detail training for automatic mixing of a slurry, a detail training for transferring a slurry, and the like. The tank cleaning training may include a detail training for inputting setting values, a detail training for semi-automatic cleaning, and the like.

In the present disclosure, the "mixing process" may be a process of mixing active material, a pre-dispersion solution, a binder, and other additives with a solvent to produce a slurry in a uniform state used for coating. In the present disclosure, the "coating process" may be a process of applying the slurry on the foil with a particular amount and shape.

In the present disclosure, the "roll pressing process" may be a process in which coated electrodes are passed between two rotating upper and lower rolls and pressed to a certain thickness. For example, a user may determine or adjust the spacing between rolls to maximize the cell capacity by increasing the electrode density through the roll pressing process.

In addition, in the present disclosure, the "slitting process" may be a process of passing electrodes between two upper and lower rotating knives and cutting the electrodes to have a predetermined width. For example, a user may determine or adjust various adjustment parameters to maintain a constant electrode width.

In the present disclosure, the "notching and drying process" may be a process of removing moisture after punching out an electrode into a particular shape. For example, a user may determine or adjust a cutting height, a length and the like to punch the electrode into a particular shape with specific quality.

In addition, in the present disclosure, the "lamination process" may be a process of sealing and cutting the electrode and the separator. For example, a user may determine or adjust a value corresponding to the x-axis and a value corresponding to the y-axis to perform cutting at a specific quality. In addition, in the present invention, the "package process" may be a process of attaching a lead and a tape to an assembled cell and packaging the assembled cell in an aluminum pouch, and the 'degas process' may be a process of removing the gas generated in the cell and re-sealing the cell.

The 'double side folding process' may be a process of double folding a side wing of the cell, and the 'characteristic inspection process' may be a process of checking cell's characteristics such as thickness, weight, length, width, and insulation voltage using a measuring device before shipment of the cell. In the case of such a process, the user may adjust conditions, values, and the like of various adjustment parameters or may change setting values corresponding to the apparatus such that each process may be performed with a specific quality within a normal range.

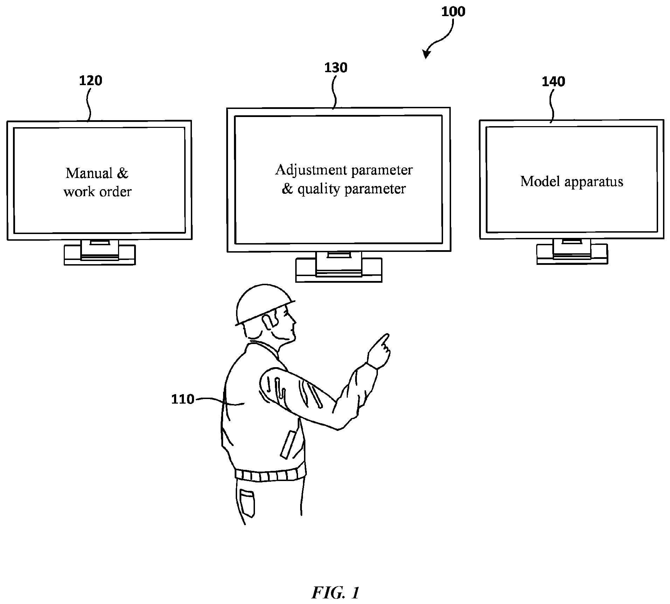

FIG. 1 illustrates an example in which a user 110 uses a simulation apparatus 100 according to an embodiment of the present disclosure. As illustrated in the figure, the simulation apparatus 100 is used for training a secondary battery production worker (e.g., user 110) and may include, for example, a manual display unit 120, a facility operating unit 130 and an apparatus operating unit 140. For example, the user 110 may operate the simulation apparatus 100 in which an equipment for the production of an actual secondary battery is implemented into a 2D or 3D model apparatus and learn how to use the corresponding equipment or how to respond when the quality of the manufactured product is degraded.

According to an embodiment, the facility operating unit 130 may include a plurality of adjustment parameters for determining the operation of the model apparatus displayed on the apparatus operating unit 140. The user 110 may execute, change, and/or correct the operation of the model apparatus by changing at least part of the conditions among a plurality of adjustment parameters. In other words, the operation of the model apparatus may be changed or corrected adaptively as the adjustment parameters input by the user 110 are changed.

In addition, the user may perform a touch input, a drag input, a pinch input, a rotation input, and the like for at least a partial area of the facility operating unit 130 to manipulate the model apparatus of the apparatus operating unit 140 or change the configuration of the model apparatus. In such a case, the user 110 may check or enlarge/reduce an arbitrary area of the model apparatus through manipulation of the facility operating unit 130, and may operate the model apparatus by performing a touch input to the facility operating unit 130, or change the configuration of the model apparatus.

The apparatus operating unit 140 may include a model apparatus related to the production of secondary batteries. Here, the model apparatus may include, but not limited to, a 3D or 2D model related to secondary battery production equipment such as, but not limited to, a mixer, a coater, a slitter, a roll presser, a lamination apparatus, a lamination and stacking apparatus, and the like, but the present invention is not limited thereto, and may further include a 3D or 2D model apparatus of any other apparatus used for the production of secondary batteries. The user 110 may manipulate the model apparatus or change the configuration of the model apparatus by performing a touch input, a drag input, or a pinch input to the model apparatus (at least part of the model apparatus) included in the apparatus operating unit 140. That is, the user 110 may check or enlarge/reduce an arbitrary area of the model apparatus by directly manipulating at least partial area of the model apparatus, and may manipulate the model apparatus or change the configuration of the model apparatus by performing a touch input and the like.

The facility operating unit 130 may include quality information related to the quality of the material produced by the model apparatus. Here, the quality information may be generated by performing an operation on the quality parameter based on a predetermined criterion and/or algorithm. That is, the user 110 may check the quality information generated in response to changing the adjustment parameter or manipulating the model apparatus through the facility operating unit 130. Additionally or alternatively, in a specific process according to the secondary battery production process, a quality check unit other than the facility operating unit 130 may be independently configured.

The facility operating unit 130 may display a driving state of the model apparatus of the apparatus operating unit 140. In the facility operating unit 130, the quality information may be displayed in a region related to the model apparatus of the apparatus operating unit 140 or confirmed by a specific operation. For example, when a button for quality check displayed on the facility operating unit 130 is selected, the quality information may be displayed or output. In another example, when a malfunction occurs in the operation of the model apparatus or a defect occurs in the quality of material produced by the model apparatus, the malfunction/defect occurrence notice may be displayed or output immediately in an area of the facility operating unit 130 corresponding to the malfunction/defect occurrence area of the model apparatus. In another example, the quality information may be displayed or output by changing a color or a setting value of at least a partial area of the facility operating unit and/or the model apparatus. For example, when the secondary battery production equipment is a mixer, the driving state of the model apparatus and the quality of the material produced by the model apparatus may be determined according to the adjustment parameters set in the facility operating unit 130 and may be displayed simultaneously on the model apparatus and the facility operating unit 130. When an error occurs in the setting value of the adjustment parameter input to the facility operating unit 130, the facility operating unit 130 outputs an input error, and when a defect occurs in at least one of the driving state of the model apparatus or the material produced by the model apparatus by the adjustment parameter of the facility operating unit 130, the corresponding defect type may be displayed on the facility operating unit 130, and the user may intuitively identify the defect of the model apparatus by monitoring the model apparatus or the facility operating unit 130.

The manual display unit 120 may display guide information such as a user manual and a work order for the facility operating unit 130 and the model apparatus of the apparatus operating unit 140. The manual display unit 120 may be a separate component from the present simulation apparatus. The user may manipulate and/or monitor at least one of the facility operating unit 130 or the apparatus operating unit 140, while checking guide information based on the manual of the manual display unit 120, to learn how to input the adjustment parameter of the facility operating unit 130 and how to use the model apparatus of the apparatus operating unit 140. In this example, the guide information is shown to be displayed on the manual display unit 120 configured separately from the apparatus operating unit 140, but the present disclosure is not limited thereto, and additionally or alternatively, the guide information may be displayed on a partial area of the apparatus operating unit 140 in a specific process according to the secondary battery production process.

In FIG. 1, it is illustrated that the simulation apparatus 100 includes one manual display unit 120 and one facility operating unit 130 and does not include a quality check unit, but the present disclosure is not limited thereto, and the manual display unit 120, the facility operating unit 130, and the quality check unit may be determined in an arbitrary number or omitted according to the type of model apparatus and the like related to the simulation apparatus 100, and two or more functions may be implemented in one component. With such a configuration, the user 110 performing secondary battery production may be trained in a method of operating the secondary battery production equipment, a method of responding to a troubleshooting situation before being put into work, and the like; by training the user 110 as described above, loss due to the occurrence of troubleshooting may be considerably reduced, and thus, the efficiency of the secondary battery production task may be improved effectively.

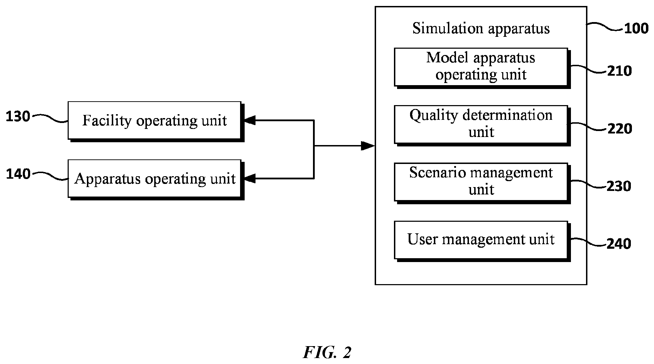

FIG. 2 is a functional diagram illustrating an internal structure of a simulation apparatus 100 according to an embodiment of the present disclosure. As illustrated in the figure, the simulation apparatus 100 (e.g., at least one processor of the simulation apparatus 100) may include, but not limited to, a model apparatus operating unit 210, a quality determination unit 220, a scenario management unit 230, and a user management unit 240. The simulation apparatus 100 may communicate with the facility operating unit 130 and the apparatus operating unit 140, and exchange data and/or information related to the model apparatus.

The model apparatus operating unit 210 may execute, change, and/or correct the operation of the model apparatus displayed on the apparatus operating unit 140 and the facility operating unit 130 according to a user's manipulation. According to an embodiment, the model apparatus operating unit 210 may obtain or receive user action information and/or user condition information using information input from the user (e.g., a secondary battery production worker). Then, the model apparatus operating unit 210 may determine or change the operation of the model apparatus and the facility operating unit 130 using the obtained or received user action information and/or user condition information.

According to an embodiment, the user action information is generated based on a user input such as touching at least part of an area of the facility operating unit 130 and/or the model apparatus included in the apparatus operating unit 140 and may include the information on the amount of change in a setting value of the model apparatus according to the user input. For example, when the model apparatus is a mixer apparatus for secondary battery production, operations such as raw material measuring and mixing, slurry transfer, and the like may be performed by touching at least a partial area (a plurality of button areas) of the facility operating unit 130, and in such a case, user action information based on the touch area may be generated.

According to an embodiment, the user condition information is generated based on a user input that changes conditions and/or values of at least part of parameters among a plurality of adjustment parameters included in the facility operating unit 130 and may include information about an amount of change in a condition value to determine the operation of the model apparatus according to the user input. For example, when the model apparatus is a mixer apparatus for secondary battery production, the user may change, for example, the type of the raw material, measurement setting value for each raw material, a rotation speed of the mixer, a rotation time, and the like to a setting value, and in such a case, user condition information based on the changed setting value may be generated.

As described above, when the operation of the model apparatus is executed based on the user condition information and/or the user action information, the quality determination unit 220 may determine or generate quality information related to the quality of a material produced by the operation of the model apparatus. In other words, when the model apparatus operates (when animations, images, color change, and the like are played to operate the model apparatus), the quality information may be determined or generated differently according to a setting value or a condition value of the corresponding model apparatus. In other words, the user may change or adjust the quality of a material produced by the model apparatus by changing adjustment parameters or setting at least part of an area of the facility operating unit 130 and/or the model apparatus by a touch input.

According to an embodiment, the quality determination unit 220 may determine or extract one or more quality parameters for determining the quality of a material produced by the model apparatus, and while the operation of the model apparatus is in execution, a value corresponding to each of one or more quality parameters determined based on the operation of the model apparatus under execution may be calculated. Here, a predetermined, arbitrary algorithm may calculate the value corresponding to the quality parameter. In addition, the quality determination unit 220 may generate quality information related to the quality of a material produced by the model apparatus based on a value corresponding to each of the one or more quality parameters calculated. For example, adjusting at least one of a rotation speed of the mixer, a current value, or a coolant may result in mixer overheating. In such a case, the quality determination unit 220 may generate or output quality information on overheating of the main mixer.

According to an embodiment, the scenario management unit 230 may determine one or more training scenarios from among a plurality of operation training scenarios of the model apparatus and change the operation of the facility operating unit and the model apparatus based on the determined one or more training scenarios. For example, when the model apparatus is a mixer, the plurality of operation training scenarios may include a raw material name and setting value input training, an insulation liquid setting training, a binder solution setting training, a pre-dispersion solution setting training, a slurry setting training, a tank cleaning training, and the like, and each training may include a plurality of detail trainings.

According to an embodiment, a trouble scenario related to a malfunction of the model apparatus may occur during or before the operation of the model apparatus. When a trouble scenario occurs as described above, at least part of the setting values, condition values, and quality information of the model apparatus may be changed to fall into an abnormal range based on the trouble scenario which has been occurred. For example, when the model apparatus is a mixer apparatus for secondary battery production, in the case of a setting value check scenario, the name or measurement setting value of at least one raw material among a plurality of raw materials may be erroneously entered in an abnormal range.

According to an embodiment, the scenario management unit 230 may determine one or more trouble scenarios from among a plurality of trouble scenarios related to the malfunction of the model apparatus and change at least one of the operation or quality information related to the material quality of the model apparatus based on the determined one or more trouble scenario. For example, when the model apparatus is a mixer, the plurality of trouble scenarios may include a valve alarm scenario, an overflow scenario, a binder solution exchange scenario, a slurry transfer scenario, an active material type exchange scenario, a setting value check scenario, a main mixer overheating scenario, and a pipe clogging scenario, and the like.

According to an embodiment, when a trouble scenario occurs, the user may convert the setting by manipulating the facility operating unit 130 and/or the model apparatus based on the guide information output to the manual display unit 120 in order to solve the trouble scenario that has occurred. In such a case, the scenario management unit 230 may receive at least one of user action information or user condition information for resolving the determined one or more trouble scenarios, correct the model apparatus changed based on at least one of the received user action information or user condition information, calculate a value corresponding to each of a plurality of quality parameters related to the quality of a material produced by the model apparatus based on the operation of the model apparatus in execution and correct the quality information related to the quality of a material produced by the corrected model apparatus based on the value corresponding to each of the plurality of calculated quality parameters.

Then, the scenario management unit 230 may determine whether one or more trouble scenarios have been resolved using the corrected quality information. For example, the scenario management unit 230 may determine that the trouble scenario is resolved when at least one of the user action information or the user condition information is input in a predetermined order, but the present disclosure is not limited thereto, and when the quality of a material falls within a predetermined normal range, the scenario management unit 230 may determine that the trouble scenario has been resolved. Additionally or alternatively, when the value of each quality parameter included in the quality information lies within the predetermined normal range or corresponds to a specific value, the scenario management unit 230 may determine that the trouble scenario has been resolved, and when a value calculated by providing each quality parameter to an arbitrary algorithm falls within a predetermined normal range, the scenario management unit 230 may determine that the trouble scenario has been resolved.

According to an embodiment, a setting value and a condition value of the model apparatus changed to lie within the range of a malfunction by a trouble scenario may be determined in advance for each trouble scenario, but the present disclosure is not limited thereto. For example, the trouble scenario may be generated based on error information generated when actual secondary battery production equipment malfunctions. In other words, when a malfunction occurs in an external device (e.g., actual secondary battery production equipment) related to the model apparatus, the scenario management unit 230 may obtain error information related to the malfunction and, based on the obtained error information, may generate a trouble scenario related to the malfunction of the model apparatus. For example, when a malfunction occurs in a device supplying a raw material to the mixing process, the scenario management unit 230 may obtain a value of each adjustment parameter and a setting value of the apparatus at the time of malfunction as error information. The scenario management unit 230 may generate a trouble scenario by changing the value of each adjustment parameter and each setting value of the apparatus obtained from an external device to correspond to the model apparatus. Since a trouble scenario occurs based on the error information from an actual apparatus using the configuration above, the simulation apparatus 100 may effectively generate training contents optimized for actual work environments.

The user management unit 240 may perform management such as registration, modification, and deletion of a user account related to a user who uses the simulation apparatus 100. According to an embodiment, the user may use the simulation apparatus 100 using the user's registered user account. In such a case, the user manager 240 may store and manage a progress level of each training scenario for each user account in an arbitrary database. Using the information stored by the user management unit 240, the scenario management unit 230 may extract information related to a specific user account stored in the database and extract or determine at least one scenario among a plurality of trouble scenarios based on the extracted information. For example, the scenario management units 230 may enable the training scenarios to be sequentially activated according to a certain training progress schedule based on information related to the user account, and for a user who has completed all of the certain training progress schedule, the user may choose any training scenario and detail training. In additions, the scenario management unit 230 may extract only a trouble scenario in which the working speed is lower than an average working speed based on the information related to the user account or provide the extracted trouble scenario to the corresponding user, but the present disclosure is not limited to the specific operation; the trouble scenario may be extracted or determined by another arbitrary criterion or a combination of arbitrary criteria.

In FIG. 2, it is assumed that functional configurations included in the simulation apparatus 100 are different from each other; however, the assumption is intended only to help understand the disclosure, and one computing device may perform two or more functions. In addition, the simulation apparatus 100 of FIG. 2 assumes to be distinguished from the facility operating unit 130 and the apparatus operating unit 140; however, the present disclosure is not limited to the assumption, and the facility operating unit 130 and the apparatus operating unit 140 may be included in the simulation apparatus 100. Using the configuration above, the simulation apparatus 100 may generate a trouble scenario having various values related to the malfunction of the secondary battery production equipment and provide the generated scenarios to the user; accordingly, the user may be trained in a method of resolving a malfunction situation that may occur in an actual apparatus without help from others and effectively learn how to respond to each situation.

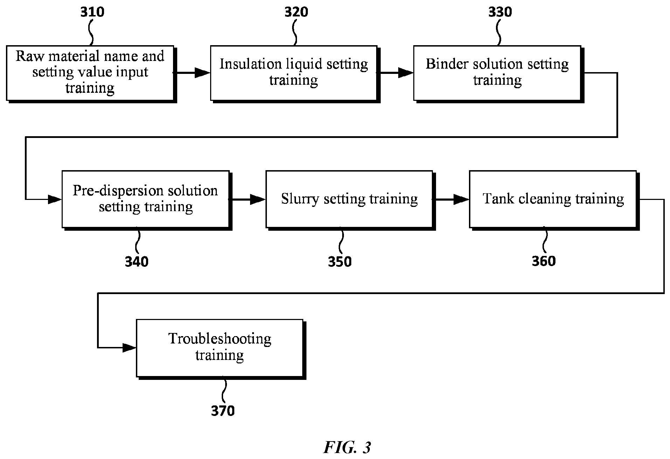

FIG. 3 is a block diagram illustrating an example in which a simulation apparatus 100 operates according to an embodiment of the present disclosure. As illustrated in the figure, the simulation apparatus (100 in FIG. 1) may include a raw material name and setting value input training step 310, an insulation liquid setting training step 320, a binder solution setting training step 330, a pre-dispersion solution setting training step 340, a slurry setting training step 350, a tank cleaning training step 360 and a troubleshooting training step 370.

The raw material name and setting value input training step 310 may be a step of learning a process of inputting the raw material name into the facility operating unit 130 and setting a measurement value for each raw material. For example, the user may learn how to input the raw material name and the measurement setting value indicated in the work order (work log) by manipulating the facility operating unit 130 according to the guide information and the work order included in the manual display unit 120. That is, while performing the raw material name and setting value input training step 310, the manual display unit 120 may display the guide information required for the raw material name and setting value input training, and the user may learn the process of inputting adjustment parameters of the facility operating unit 130 or setting the model apparatus, while checking the work order according to the instruction of the guide information displayed on the manual display unit 12.

A partial area of the screen may be turned on or activated so that the user may perform the work corresponding to the work order, and when the user correctly inputs all raw material names and setting values, an arbitrary button (e.g., OK button or COMPLETED button) may be displayed or activated on the facility operating unit 130, and it may proceed to the next step or a button (e.g., start next step button, etc.) leading to the next step may be displayed or activated.

The insulation liquid setting training step 320 may be a step of learning a process of prepreparing and inputting a mixer setting value before producing an insulation liquid to be used for insulation coating. The insulation liquid setting training step 320 may include a detail training for semi-automatic setting of an insulation liquid, a detail training for semi-automatic mixing of an insulation liquid, a detail training for automatic mixing of an insulation liquid, a detail training for transferring an insulation liquid, and the like. In this insulation liquid setting training step 320, the user may learn a process of inputting the measurement setting values (raw material name, input amount, input order) and mixing setting values (rotation speed, mixing time) indicated in the work order (work log), mixing the input materials, and transferring the mixed insulation liquid to the storage tank by manipulating the facility operating unit 130 according to the insulation liquidrelated guide information and work order included in the manual display unit 120. That is, while performing the insulation liquid setting training step 320, the manual display unit 120 may display the guide information required for the insulation liquid setting training, and the user may learn the entire process of inputting adjustment parameters of the facility operating unit 130 required to prepare an insulation liquid, mixing, and transferring, while checking the work order according to the instruction of the guide information displayed on the manual display unit 12.

A partial area of the screen may be turned on or activated so that the user may perform the work corresponding to the work order, and when the user correctly inputs all raw material names and setting values, an arbitrary button (e.g., OK button or COMPLETED button) may be displayed or activated on the facility operating unit 130, and it may proceed to the next step or a button (e.g., start next step button, etc.) leading to the next step may be displayed or activated.

The binder solution setting training step 330 may be a step of learning a process of prepreparing and inputting a mixer setting value before producing a binder solution input to an anode main mixer. The binder solution setting training step 330 may include a detail training for semi-automatic setting of a binder solution, a detail training for semi-automatic mixing of a binder solution, a detail training for automatic mixing of a binder solution, a detail training for transferring a binder solution, and the like. In this binder solution setting training step 330, the user may learn a process of inputting the measurement setting values (raw material name, input amount, input order) and mixing setting values (rotation speed, mixing time) indicated in the work order (work log), mixing the input materials, and transferring the mixed binder solution to the storage tank by manipulating the facility operating unit 130 according to the binder solution-related guide information and work order included in the manual display unit 120. That is, while performing the binder solution setting training step 330, the manual display unit 120 may display the guide information required for the binder solution setting training, and the user may learn the entire process of inputting adjustment parameters of the facility operating unit 130 required to prepare the binder solution, mixing, and transferring, while checking the work order according to the instruction of the guide information displayed on the manual display unit 120.

A partial area of the screen may be turned on or activated so that the user may perform the work corresponding to the work order, and when the user correctly inputs all raw material names and setting values, an arbitrary button (e.g., OK button or COMPLETED button) may be displayed or activated on the facility operating unit 130, and it may proceed to the next step or a button (e.g., start next step button, etc.) leading to the next step may be displayed or activated.

The pre-dispersion solution setting training step 340 may be a step of learning a process of inputting a mixer setting value before producing a pre-dispersion solution in which a conductive material, a binder, and a dispersant are mixed in advance to improve dispersibility of the anode slurry. The pre-dispersion solution setting training step 340 may include a detail training for semi-automatic setting of a pre-dispersion solution, a detail training for semi-automatic mixing of a pre-dispersion solution, a detail training for automatic mixing of a pre-dispersion solution, a detail training for transferring a pre-dispersion solution, and the like. In this pre-dispersion solution setting training step 340, the user may learn a process of inputting the measurement setting values (raw material name, input amount, input order) and mixing setting values (rotation speed, mixing time) indicated in the work order (work log), mixing the input materials, and transferring the mixed pre-dispersion solution to the storage tank by manipulating the facility operating unit 130 according to the pre-dispersion solution-related guide information and work order included in the manual display unit 120. That is, while performing the pre-dispersion solution setting training step 340, the manual display unit 120 may display the guide information required for the pre-dispersion solution setting training, and the user may learn the entire process of inputting adjustment parameters of the facility operating unit 130 required to manufacture the pre-dispersion solution, mixing, and transferring, while checking the work order according to the instruction of the guide information displayed on the manual display unit 120.

A partial area of the screen may be turned on or activated so that the user may perform the work corresponding to the work order, and when the user correctly inputs all raw material names and setting values, an arbitrary button (e.g., OK button or COMPLETED button) may be displayed or activated on the facility operating unit 130, and it may proceed to the next step or a button (e.g., start next step button, etc.) leading to the next step may be displayed or activated.

The slurry setting training step 350 may be a step of learning a process of inputting a mixer setting value before producing a slurry in which a powdery material and a solution material are evenly dispersed in a solvent. The slurry setting training step 350 may include a detail training for semi-automatic setting of a slurry, a detail training for semi-automatic mixing a slurry, a detail training for automatic mixing of a slurry, a detail training for transferring a slurry, and the like. In this slurry setting training step 350, the user may learn a process of inputting the measurement setting values (raw material name, input amount, input order) and mixing setting values (rotation speed, mixing time) indicated in the work order (work log), mixing the input materials, and transferring the mixed slurry to the storage tank by manipulating the facility operating unit 130 according to the slurry-related guide information and work order included in the manual display unit 120. That is, while performing the slurry setting training step 350, the manual display unit 120 may display the guide information required for the slurry setting training, and the user may learn the entire process of inputting adjustment parameters of the facility operating unit 130 required to produce the slurry, mixing, and transferring, while checking the work order according to the instruction of the guide information displayed on the manual display unit 120.

A partial area of the screen may be turned on or activated so that the user may perform the work corresponding to the work order, and when the user correctly inputs all raw material names and setting values, an arbitrary button (e.g., OK button or COMPLETED button) may be displayed or activated on the facility operating unit 130, and it may proceed to the next step or a button (e.g., start next step button, etc.) leading to the next step may be displayed or activated.

The tank cleaning training step 360 may be a step of learning a process of inputting a setting value for cleaning by spraying a solvent (NMP) into the storage tank storing the binder solution, the pre-dispersion solution, the slurry, and the like. The tank cleaning training step 360 may include a detail training for inputting setting values, a detail training for semi-automatic cleaning, and the like. In this tank cleaning training step 360, the user may learn a process of inputting the cleaning setting values indicated in the work order (work log), and cleaning the storage tank using a solvent by manipulating the facility operating unit 130 according to the tank cleaning-related guide information and work order included in the manual display unit 120. That is, while performing the tank cleaning training step 360, the manual display unit 120 may display the guide information required for the tank cleaning training, and the user may learn the entire process of inputting adjustment parameters of the facility operating unit 130 required to clean the tank, or manipulating the model apparatus, while checking the work order according to the instruction of the guide information displayed on the manual display unit 120.

A partial area of the screen may be turned on or activated so that the user may perform the work corresponding to the work order, and when the user correctly inputs all raw material names and setting values, an arbitrary button (e.g., OK button or COMPLETED button) may be displayed or activated on the facility operating unit 130, and it may proceed to the next step or a button (e.g., start next step button, etc.) leading to the next step may be displayed or activated.

The troubleshooting training step 370 may be a step in which the user learns how to check and take action on troubles that occur during the operation of the secondary battery production equipment. The troubleshooting training step 370 may include a detail step for valve alarm, a detail step for overflow, a detail step for changing a binder solution, a detail step for transferring a slurry, a detail step for exchanging an active material type, a detail step for checking set values, a detail step for overheating of a main mixer, a detail step for pipe clogging and the like. When a troubleshooting training occurs, a trouble occurs, and the manual display unit may display or output guide information such as condition information (type of adjustment parameter, value of adjustment parameter) and action information (button to be manipulated) that should be manipulated to solve the trouble. The user may deal with defects based on the displayed guide information and learn the troubleshooting method.

In the troubleshooting training step 370, each of a plurality of trouble scenarios or a combination thereof may be repeatedly processed or solved to train the troubleshooting method. For example, a plurality of trouble scenarios may be sequentially activated so that the user may be trained in the plurality of trouble scenarios sequentially, but the present disclosure is not limited thereto, and the user may directly select one trouble scenario from among the plurality of trouble scenarios, and it is also possible to train a trouble scenario arbitrarily determined by the simulator device.

The raw material name and measurement value setting training step 310, the insulation liquid setting training step 320, the binder solution setting training step 330, the pre-dispersion solution setting training step 340, the slurry setting training step 350 and the troubleshooting training step 360 in FIG. 3 may proceed sequentially according to the progress schedule, and it may be configured to activate the next step training after completing one previous training step. In addition, a plurality of detail training steps constituting each training step may be configured to be activated sequentially.

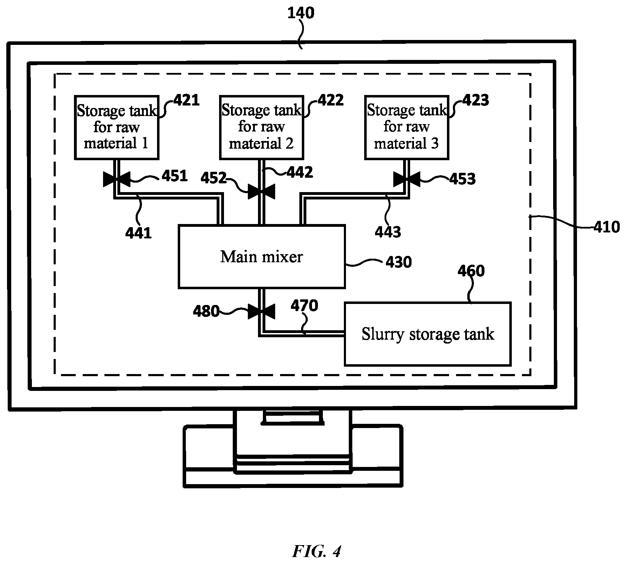

FIG. 4 illustrates an example of a display screen displayed or output on an apparatus operating unit 140 according to an embodiment of the present disclosure. As illustrated, the apparatus operating unit 140 may display or output a model apparatus 410 simulating a mixer apparatus for secondary battery production in 2D on a display screen. The model apparatus 410 may include text, images, videos, and the like, and may operate based on user condition information and/or user action information input from the user. The model apparatus may include a plurality of raw material storage tank images 421, 422, 423 for storing raw materials, a main mixer image 430, a plurality of measuring pipe images 441, 442, 443 connected between the plurality of raw material storage tank images 421, 422, 423 and the main mixer image 430, a plurality of measuring valve images 451, 452, 453 displayed overlapping the plurality of measuring pipe images 441, 442, 443, a slurry storage tank image 460 for storing the mixed slurry, a transfer pipe image 470 connected between the main mixer image 430 and the slurry storage tank image 460, and a transfer valve image 480 displayed overlapping the transfer pipe image 470.

In the raw material storage tank images 421, 422, and 423, colors of upper and lower layers may be displayed differently depending on a remaining amount of the raw material in the corresponding storage tank. This allows the user to monitor the raw material level in the corresponding storage tank. When the raw material is measured and transferred from the raw material storage tank to the main mixer, or when the slurry is transferred from the main mixer to the slurry storage tank, the color of the measuring valve image, the measuring pipe image, the transfer valve image, the transfer pipe image, and the like may be changed to another predetermined color. For example, the color of the pipe image may be gray when the raw material or slurry is not transferred, and the color of the pipe image may be changed to red when the raw material or slurry is transferred. In addition, the color of the valve related to the corresponding pipe may be displayed in different colors for the valve opening and the valve closing. In addition, when the main mixer is stirred, the color of the main mixer image may be changed to another predetermined color. For example, when the main mixer is stirred, the color of the corresponding main mixer image may be changed to green, the rotation speed of the main mixer may be displayed as text, and an animation of the stirrer of the main mixer rotating may be displayed by popping up. When the measuring valve malfunctions, the color of the measuring pipe image and the measuring valve image may be changed to another predetermined color, and when the transfer valve malfunctions, the color of the transfer pipe image and the transfer valve image may be changed to another predetermined color,

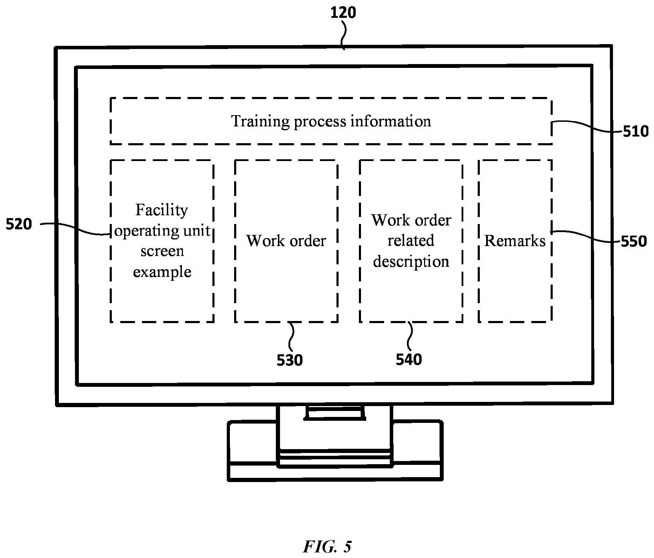

FIG. 5 illustrates an example of a display screen displayed or output on the manual display unit 120 according to an embodiment of the present invention. As illustrated, the manual display unit 120 may display or output training process information 510, a facility operating unit screen example 520, a work order 530, a work order related description 540, remarks 550, and the like on the display screen. It is illustrated that the training process information 510, the facility operating unit screen example 520, the work order 530, the work order related description 540, the remarks 550, and the like are displayed in a specific area on the display screen, but the present disclosure is not limited thereto, and each text, image, video, and the like may be displayed on an arbitrary area of the display screen.

An area for the training process information 510 may display or output a training stage and a detail training stage of the training currently being taken by the user. An area for the facility operating unit screen example 520 may display or output a facility operating unit screen image so that the user may recognize an area of the facility operating unit to be manipulated. An area for the work order 530 may sequentially display or output work details to be manipulated by the user. An area for the work order related description 540 may display or output additional description related to the work order. An area for the remarks 550 may display or output points to be aware of during working. Mutually related items of the facility operating unit screen example 520, the work order 530, the work order related description 540 and the remarks 550 may be displayed or output in connection with each other.

The user may perform touch input or text input on at least a portion of the facility operating unit 130 based on the description of the work order 530 while referring to the facility operating unit screen example 520 displayed on the manual display unit 120, and may be trained according to each training scenario.

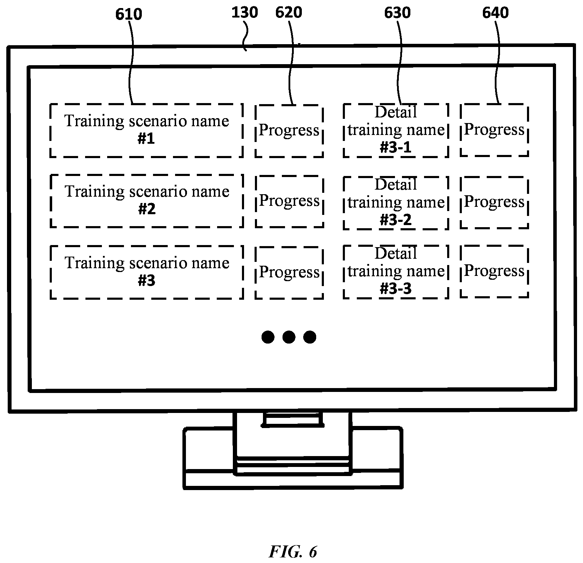

FIG. 6 illustrates an example of a display screen displayed or output on the facility operating unit 130 related to the mixer apparatus according to an embodiment of the present invention. As illustrated, the facility operating unit 120 may display a training scenario name 610 corresponding to a plurality of training scenarios for each user and progress information 620 for each training scenario. The training scenario name may include the raw material name and setting value input training, the insulation liquid setting training, the binder solution setting training, the pre-dispersion solution setting training, the slurry setting training, the tank cleaning training, the troubleshooting training, and the like. The progress information 620 of each training step may be displayed as whether it is completed or not, or it may be displayed as a percentage by reflecting the progress of the detail training step. When an arbitrary training scenario name is selected, a detail training name 630 corresponding to a plurality of detail trainings constituting the training scenario (e.g., training scenario name #3) and progress information 640 for each detail training may be displayed. The progress information 640 for each detail training may be displayed as whether the training is completed or not, or the progress level may be displayed as a percentage.

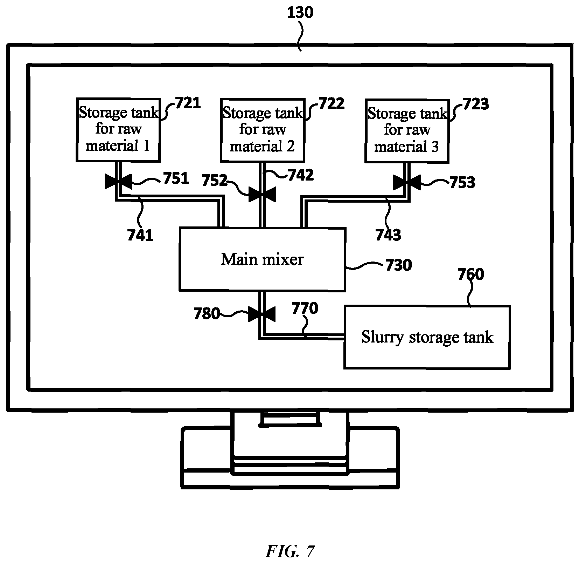

FIG. 7 illustrates an example of a display screen displayed or output on the facility operating unit 130 related to a mixer apparatus according to another embodiment of the present invention. According to an embodiment, the mixer apparatus may refer to an apparatus for producing a slurry by mixing an active material, a binder, and other additives for secondary battery production with a solvent. Similar to the model apparatus of the apparatus operating unit 140, the facility operating unit 130 may simulate a mixer apparatus for secondary battery production and display it on a screen.

Similar to the model apparatus, the mixer simulation area displayed on the facility operating unit 130 may include a plurality of raw material storage tank images 721, 722, 723 for storing raw materials, a main mixer image 730, a plurality of measuring pipe images 741, 742, 743 connected between the plurality of raw material storage tank images 721, 722, 723 and the main mixer image 730, a plurality of measuring valve images 751, 752, 753 displayed overlapping the plurality of measuring pipe images 741, 742, 743, a slurry storage tank image 760 for storing the mixed slurry, a transfer pipe image 770 connected between the main mixer image 730 and the slurry storage tank image 760, and a transfer valve image 780 displayed overlapping the transfer pipe image 770 .

The raw material storage tank images 721, 722, and 723 may indicate the remaining amount of the raw material in the corresponding storage tank as an image or numerical value. When the raw material is measured and transferred from the raw material storage tank to the main mixer, or when the slurry is transferred from the main mixer to the slurry storage tank, the color of the measuring valve image, the measuring pipe image, the transfer valve image, the transfer pipe image, and the like may be changed to another predetermined color. For example, the color of the pipe image may be gray when the raw material or slurry is not transferred, and the color of the pipe image may be changed to green when the raw material or slurry is transferred. In addition, the color of the valve related to the corresponding pipe may be displayed in different colors for the valve opening and the valve closing. In addition, when the main mixer is stirred, the color of the main mixer image may be changed to another predetermined color. For example, when the main mixer is stirred, the color of the corresponding main mixer image may be changed to green, and the rotation speed of the main mixer may be displayed as text. When the measuring valve malfunctions, the color of the measuring pipe image and the measuring valve image may be changed to another predetermined color, and when the transfer valve malfunctions, the color of the transfer pipe image and the transfer valve image may be changed to another predetermined color,

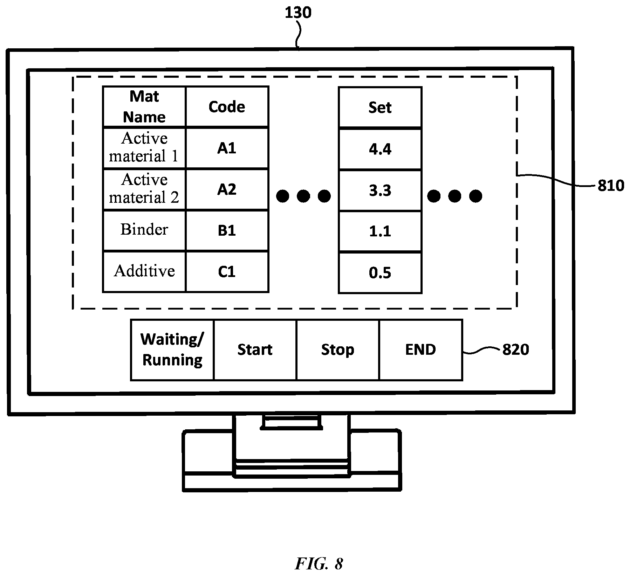

FIG. 8 illustrates an example of a display screen displayed or output on the facility operating unit 130 related to a mixer apparatus according to another embodiment of the present invention. An adjustment parameter input area 810 for inputting as text material information used in the mixing process and a button area 820 to be touched to manipulate the mixer model apparatus may be displayed on the facility operating unit 130. This button area 820 may be additionally or selectively displayed on the apparatus operating unit 140. The adjustment parameter input area 810 is a screen for the user to input the raw material name, code, setting value, and the like as text while viewing the work order. If the user inputs the raw material name, code, setting value, and the like without error, a mark (e.g., OK mark) indicating that there is no error may additionally be displayed.

Any button in the button area may change the text displayed on the button whenever a touch input is made (e.g., it changes to Waiting <-> Running each time it is touched). Any button in the button area may change the color of the corresponding button whenever a touch input is made (e.g., the color changes to black <-> green or red when the Start/Stop button is activated). The facility operating unit 130 may additionally display overlapping of a plurality of screens having separate layouts while the simulation apparatus of the present invention is operated. When the user clicks on the button area, the color of the corresponding button may be changed or a new screen may be popped up and displayed.

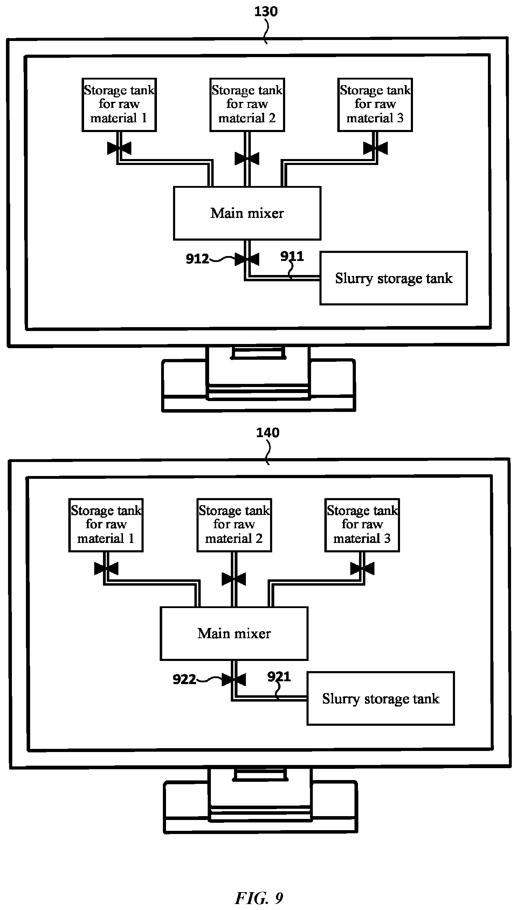

FIG. 9 illustrates an example in which a valve alarm scenario has occurred according to an embodiment of the present disclosure. The simulation apparatus (100 of FIG. 1) may determine one or more trouble scenarios among a plurality of trouble scenarios related to a malfunction of the mixer apparatus and, based on the determined one or more trouble scenarios, may change at least one of the operation of the mixer model apparatus or quality information related to the quality of the material. Here, the plurality of trouble scenarios may include a valve alarm scenario caused by a valve malfunction. For example, the valve alarm scenario may refer to a scenario for training a response method when automatic mixing is stopped due to a valve malfunction occurring during automatic slurry mixing.

According to an embodiment, when the determined one or more trouble scenarios include a valve alarm scenario, the simulation apparatus may change a predetermined area (e.g., pipe image, valve image) of the mixer simulation area of the facility operating unit and the mixer model apparatus of the apparatus operating unit 140 to a predetermined state (image, video, color, animation), and a sound alarm may be selectively generated depending on the type of trouble scenario. For example, when the transfer valve malfunctions, the color of the transfer pipe image 911 of the mixer simulation area of the facility operating unit 130 is changed from green to gray, and the color of the transfer valve image 912 may be changed from green to blue. In addition, the color of the transfer pipe image 921 and the transfer valve image 922 of the mixer model apparatus may be changed to a color different from that during normal operation.

When a valve alarm scenario is generated in this way, the user may be trained in the valve alarm training according to the valve alarm scenario by manipulating the manipulation button displayed in the button area of the facility operating unit 130, changing the adjustment parameter displayed in the adjustment parameter input area of the facility operating unit 130, or touching or dragging a specific area of the mixer model apparatus displayed on the apparatus operating unit 140, based on the guide information or the work order (work log) displayed on the manual display unit 120. In other words, when at least one of user condition information or user action information is input by the user from the facility operating unit 130 and the apparatus operating unit 140 in the predetermined order, the simulation apparatus may determine that the corresponding valve alarm scenario is completed.

Similarly, when the storage tank overflow scenario during transferring of the mixed insulation liquid, binder solution, pre-dispersion solution, and the like to the storage tank is executed, the simulation apparatus may change a predetermined area (e.g., storage tank image, pipe image, valve image) among the mixer simulation area of the facility operating unit 130 and the mixer model apparatus of the apparatus operating unit 140 to a predetermined state (image, video, color, animation), and a sound alarm may be selectively generated according to the storage tank overflow scenario. The user may be trained in the storage tank overflow training according to the storage tank overflow scenario by manipulating the manipulation button displayed in the button area of the facility operating unit 130, changing the adjustment parameter displayed in the adjustment parameter input area of the facility operating unit 130, or touching or dragging a specific area of the mixer model apparatus displayed on the apparatus operating unit 140, based on the guide information or the work order (work log) displayed on the manual display unit 120. In other words, when at least one of user condition information or user action information is input by the user from the facility operating unit 130 and the apparatus operating unit 140 in the predetermined order, the simulation apparatus may determine that the corresponding storage tank overflow scenario is completed.

In addition, at least one of a binder solution exchange scenario in which residual binder solution in the pipe and storage tank is discharged and discarded during simple binder cleaning, a slurry transfer scenario in which the mixed slurry is transferred from the slurry mixer to the storage tank, an active material type exchange scenario in which the active material is discharged, a setting value check scenario in which whether the raw material setting value is input correctly is checked, a main mixer overheat scenario in which the temperature rises above a threshold during mixing of the main mixer, or a pipe clog scenario to avoid transfer pipe clogging is executed, the simulation apparatus may change a predetermined area (e.g., storage tank image, pipe image, valve image) among the mixer simulation area of the facility operating unit 130 and the mixer model apparatus of the apparatus operating unit 140 to a predetermined state (image, video, color, animation), and a sound alarm may be selectively generated according to the executed scenario. The user may be trained in the troubleshooting training according to the executed scenario by manipulating the manipulation button displayed in the button area of the facility operating unit 130, changing the adjustment parameter displayed in the adjustment parameter input area of the facility operating unit 130, or touching or dragging a specific area of the mixer model apparatus displayed on the apparatus operating unit 140, based on the guide information or the work order (work log) displayed on the manual display unit 120. In other words, when at least one of user condition information or user action information is input by the user from the facility operating unit 130 and the apparatus operating unit 140 in the predetermined order, the simulation apparatus may determine that the corresponding trouble scenario is completed.

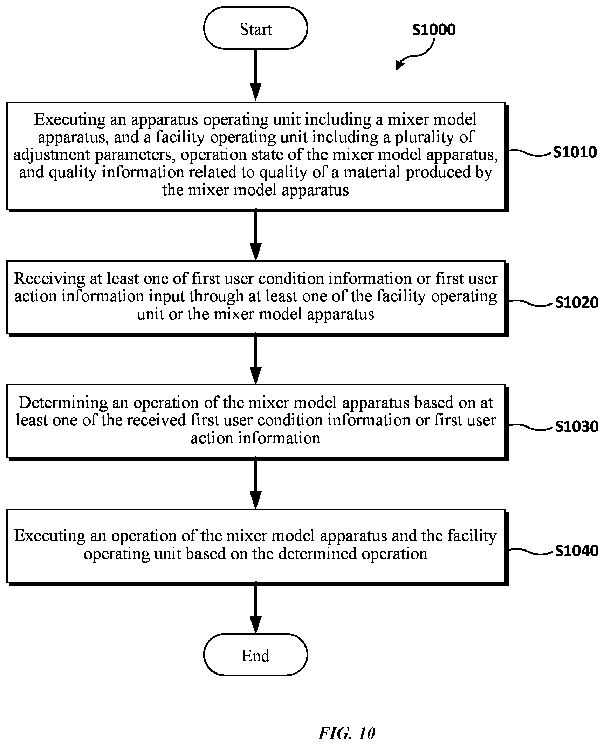

FIG. 10 illustrates an example of a mixer simulation method S1000 for secondary battery production according to an embodiment of the present disclosure. The simulation method S1000 for secondary battery production may be performed by a processor (e.g., at least one processor of a simulation apparatus). As illustrated in the figure, the simulation method S1000 for secondary battery production may be initiated as the processor outputs an apparatus operating unit including a mixer model apparatus related to secondary battery production, a facility operating unit including a plurality of condition parameters for determining operation of the mixer apparatus, information related to the operating state of the mixer model apparatus and quality information related to the quality of the material produced by the mixer model apparatus S1010. In an embodiment, the manual display unit including guide information such as a user manual and a work order for the facility operating unit 130 and the mixer model apparatus of the apparatus operating unit 140 may be further output. The above-described manual display unit may be output by another processor separate from the process of the simulation apparatus.

The processor may obtain at least one of first user action information or first user condition information obtained through at least one of the facility operating unit or the mixer model apparatus S1020. Here, the first user condition information may include information related to a value corresponding to at least one adjustment parameter among a plurality of adjustment parameters. For example, the adjustment parameter may include at least one of a raw material name, a raw material code name, a raw material setting value, a stirrer rotation speed of the main mixer, or a mixing time. The first user action information may include a touch input performed on at least a partial area of the facility operating unit, or may be information generated by a predetermined algorithm based on the corresponding user input. For example, the first user action information may include a raw material measuring start/end touch input, a mixing start/end touch input, a slurry transfer start/end touch input, a main mixer rotation control input, and the like.

The processor may determine the operation of the mixer model apparatus among at least one of raw material measuring, mixing of the measured raw material, and transferring of the mixed material based on at least one of the first user action information or the first user condition information obtained S1030.

In addition, the processor may execute the operation of the mixer model apparatus included in the apparatus operating unit and the facility operating unit based on the determined operation S1040.

If the determined operation is raw material measuring, the processor executes at least one of changing the state of the measuring pipe image of the facility operating unit or changing the state of the measuring pipe image of the mixer model apparatus. If the determined operation is mixing of the measured material, the processor executes at least one of changing the state of the main mixer image of the facility operating unit, changing the number of rotations of the agitator of the facility operating unit, or changing the state of the main mixer image of the mixer model apparatus. If the determined operation is transferring of the mixed material (insulation liquid, binder solution, pre-dispersion solution, slurry, and the like), the processor executes at least one of changing the state of the transfer pipe image of the facility operating unit or changing the state of the transfer pipe image of the mixer model apparatus.

When receiving the first user action information, the processor may determine whether the received first user action information corresponds to a predetermined operating condition of the mixer model apparatus and approve the operation of the mixer model apparatus when it is determined that the first user action information corresponds to the predetermined operating condition of the mixer model apparatus.

According to an embodiment, the processor may determine one or more quality parameters for determining the quality of a material produced by the mixer model apparatus and, while the operation of the mixer model apparatus is executed, calculate a value corresponding to each of the determined one or more quality parameters based on the operation of the mixer model apparatus in execution. In addition, the processor may generate operation state information of the mixer model apparatus and quality information related to the quality of the material produced by the model apparatus based on the calculated value corresponding to each of the one or more quality parameters

According to an embodiment, the processor may determine one or more trouble scenarios among a plurality of trouble scenarios related to a malfunction of the mixer model apparatus and change at least one of the mixer model apparatus's operation state, quality information related to the quality of the material, or the operation state of the facility operating unit based on the determined one or more trouble scenarios. For example, the plurality of trouble scenarios may include valve alarm scenario, overflow scenario, binder liquid exchange scenario, slurry transfer scenario, active material type exchange scenario, setting value check scenario, main mixer overheat scenario, pipe clogging scenario, and the like. When the trouble scenario is executed, the image or color of a partial area of the facility operating unit or the mixer model apparatus may be changed according to each scenario.

After the trouble scenario is executed, the processor may receive at least one of second user action information or second user condition information for resolving the determined one or more trouble scenarios and, based on at least one of the received second user action information or second user condition information, correct the changed operation state of the mixer model apparatus and quality information related to the quality of the material. In addition, while the corrected operation of the mixer model apparatus is executed, the processor may calculate a value corresponding to each of a plurality of quality parameters related to the quality of a material produced by the mixer model apparatus based on the operation of the mixer model apparatus in execution. In such a case, the processor may correct the quality information related to the quality of a material produced by the corrected mixer model apparatus based on the calculated value corresponding to each of the plurality of quality parameters and, by using the corrected quality information, determine whether one or more trouble scenarios have been resolved.

That is, when the trouble scenario is executed, the user may operate the adjustment parameter of the facility operating unit or manipulate the manipulation button based on the guide information displayed on the manual display unit, and the processor may obtain the second user condition according to the user's manipulation of the adjustment parameter or the second user action information according to the user's manipulation of the manipulation button to determine whether the corresponding trouble scenario is resolved.

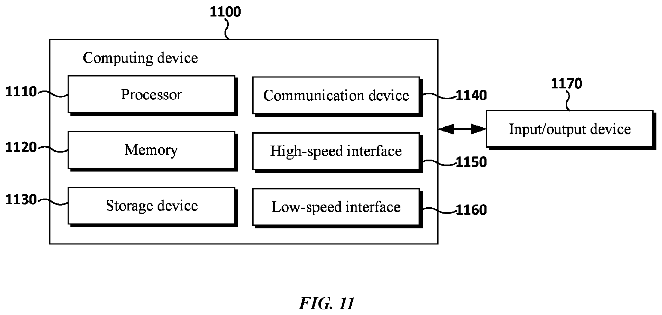

FIG. 11 illustrates an exemplary computing device 1100 for performing the method and/or embodiments. According to an embodiment, the computing device 1100 may be implemented using hardware and/or software configured to interact with a user. Here, the computing device 1100 may include the simulation apparatus (100 of FIG. 1). For example, the computing device 1100 may be configured to support virtual reality (VR), augmented reality (AR), or mixed reality (MR) environments but the present disclosure is not limited thereto. The computing device 1100 may include a laptop computer, a desktop computer, a workstation, a personal digital assistant, a server, a blade server, and a mainframe computer, which is not limited thereto. The constituting elements of the computing device 1100 and connection relationships and functions of the constituting elements are intended to be illustrative and not intended to limit the implementations of the present disclosure described and/or claimed herein.

The computing device 1100 includes a processor 1110, a memory 1120, a storage device 1130, a communication device 1140, a high-speed interface 1150 connected to the memory 1120 and a high-speed expansion port, and a low-speed interface 1160 connected to a low-speed bus and a low-speed storage device. Each of the constituting elements 1110, 1120, 1130, 1140, 1150, 1160 may be interconnected using a variety of buses, mounted on the same main board, or mounted and connected in other suitable ways. The processor 1110 may be configured to process instructions of a computer program by performing basic arithmetic, logic, and input/output operations. For example, the processor 1110 may process instructions stored in the memory 1120 and the storage device 1130 and/or instructions executed within the computing device 1100 and display graphic information on an external input/output device 1170 such as a display device combined with the high-speed interface 1150.

The communication device 1140 may provide a configuration or a function for the input/output device 1170 and the computing device 1100 to communicate with each other through a network and provide a configuration or a function to support the input/output device 1170 and/or the computing device 1100 to communicate with another external apparatus. For example, a request or data generated by the processor of the external apparatus according to an arbitrary program code may be transmitted to the computing device 1100 through a network under the control of the communication device 1140. Conversely, a control signal or a command provided under the control of the processor 1110 of the computing device 1100 may be transmitted to another external device through the communication device 1140 and a network.

FIG. 11 assumes that the computing device 1100 includes one processor 1110 and one memory 1120, but the present disclosure is not limited to the assumption; the computing device 1100 may be implemented using a plurality of memories, a plurality of processors, and/or a plurality of buses. In addition, although FIG. 11 assumes that one computing device 1100 is employed, the present disclosure is not limited to the assumption, and a plurality of computing devices may interact with each other and perform operations required to execute the method described above.

The memory 1120 may store information in the computing device 1100. According to an embodiment, the memory 1120 may include a volatile memory unit or a plurality of memory units. Additionally or alternatively, the memory 1120 may be composed of a non-volatile memory unit or a plurality of memory units. In addition, the memory 1120 may be implemented using a different type of computer-readable medium, such as a magnetic disc or an optical disc. In addition, an operating system and at least one program code and/or instruction may be stored in the memory 1120.

The storage device 1130 may be one or more mass storage devices for storing data for the computing device 1100. For example, the storage device 1130 may be configured to include a hard disc; a magnetic disc such as a portable disc; an optical disc; a semiconductor memory device such as an erasable programmable read-only memory (EPROM), an electrically erasable PROM (EEPROM), and a flash memory; and a computer-readable medium including a CD-ROM or DVD-ROM disc; or the storage device 1130 may be configured to include the computer-readable medium. In addition, the computer program may be implemented tangibly in the computer-readable medium.

The high-speed interface 1150 and the low-speed interface 1160 may be used for interaction with the input/output device 1170. For example, an input device may include a camera including an audio sensor and/or an image sensor, a keyboard, a microphone, and a mouse; an output device may include a display, a speaker, and a haptic feedback device. In another example, the high-speed interface 1150 and the low-speed interface 1160 may be used for interfacing with a device in which a configuration or function for performing input and output operations is integrated into one entity, such as a touch screen.

According to an embodiment, the high-speed interface 1150 manages bandwidth-intensive operations for the computing device 1100, while the low-speed interface 1160 manages less bandwidth-intensive operations than the high-speed interface 1150, where the above functional assignment has been made merely for an illustrative purpose. According to an embodiment, the high-speed interface 1150 may be coupled to high-speed expansion ports capable of accommodating the memory 1120, the input/output device, and various expansion cards (not shown). In addition, the low-speed interface 1160 may be coupled to the storage device 1130 and low-speed expansion ports. Additionally, the low-speed expansion port, which may include various communication ports (e.g., USB, Bluetooth, Ethernet, and wireless Ethernet), may be coupled to one or more input/output devices 1170, such as a keyboard, a pointing device, and a scanner, or a networking device, such as a router or a switch, through a network adaptor.

The computing device 1100 may be implemented in many different forms. For example, the computing device 1100 may be implemented as a standard server or a group of standard servers. Additionally or alternatively, the computing device 1100 may be implemented as part of a rack server system or may be implemented as a personal computer, such as a laptop computer. In such a case, constituting elements from the computing device 1100 may be combined with other constituting elements of an arbitrary mobile device (not shown). The computing device 1100 may include one or more other computing devices or may be configured to communicate with one or more computing devices.

FIG. 11 assumes that the input/output device 1170 is not included in the computing device 1100, but the present disclosure is not limited to the assumption; the input/output device 1170 may be configured to be integrated into the computing device 1100 to form a single device. In addition, FIG. 11 illustrates that the high-speed interface 1150 and/or the low-speed interface 1160 are illustrated as being configured separately from the processor 1110; however, the present disclosure is not limited thereto, and the high-speed interface 1150 and/or the low-speed interface 1160 may be configured to be included in the processor 1110.

The method and/or various embodiments described above may be implemented in digital electronic circuitry, computer hardware, firmware, software, and/or a combination thereof. Various embodiments of the present disclosure may be executed by a data processing device, for example, one or more programmable processors and/or one or more computing devices; or implemented as a computer-readable medium and/or a computer program stored on a computer-readable medium. The computer program may be written in any form of programming language including a compiled language or an interpreted language and may be distributed in any form such as a stand-alone program, a module, or a subroutine. The computer program may be distributed via a plurality of computing devices connected through one computing device and the same network and/or a plurality of distributed computing devices connected through a plurality of different networks.

The method and/or various embodiments described above may be performed by one or more processors configured to execute one or more computer programs that process, store, and/or manage arbitrary functions by operating based on input data or generating output data. For example, the method and/or various embodiments of the present disclosure may be performed by a special-purpose logic circuit such as a Field Programmable Gate Array (FPGA) or an Application Specific Integrated Circuit (ASIC); an apparatus and/or a system for performing the method and/or various embodiments of the present disclosure may be implemented as a special-purpose logic circuit such as an FPGA or an ASIC.

The one or more processors executing the computer program may include a generalpurpose or special-purpose microprocessor and/or one or more processors of an arbitrary type of digital computing device. The processor may receive instructions and/or data from each of the read-only memory and the random-access memory or may receive instructions and/or data from the read-only memory and the random-access memory. In the present disclosure, the constituting elements of a computing device performing the method and/or embodiments may include one or more processors for executing instructions; and one or more memories for storing instructions and/or data.

According to an embodiment, the computing device may send and receive data to and from one or more mass storage devices for storing data. For example, the computing device may receive data from a magnetic or optical disc and transmit data to the magnetic or optical disc. A computer-readable medium suitable for storing instructions and/or data related to a computer program may include any form of non-volatile memory including a semiconductor memory device such as an Erasable Programmable Read-Only Memory (EPROM), an Electrically Erasable PROM (EEPROM), and a flash memory device; however, the present disclosure is not limited thereto. For example, a computer-readable medium may include a magnetic disc such as an internal hard disc or a removable disc, a photomagnetic disk, a CD-ROM disc, and a DVD-ROM disc.

To provide interaction with a user, the computing device may include a display device (e.g., a cathode ray tube (CRT) or a liquid crystal display (LCD)) for providing or displaying information to the user and a pointing device (e.g., a keyboard, a mouse, or a trackball) through which the user may provide input and/or commands to the computing device by the user; however, the present disclosure is not limited to the specific example above. In other words, the computing device may further include any other kind of device for providing interaction with the user. For example, the computing device may provide any form of sensory feedback to the user for interaction with the user, including visual feedback, auditory feedback, and/or tactile feedback. In response to the feedback, the user may provide input to the computing device through various gestures including a visual expression, voice, and motion.

In the present disclosure, various embodiments may be implemented in a computing device that includes a back-end component (e.g., a data server), a middleware component (e.g., an application server), and/or a front-end component. In such a case, the constituting elements may be interconnected by any form or any medium of digital data communication, such as a communication network. According to an embodiment, the communication network includes a wired network such as Ethernet, a wired home network (Power Line Communication), a telephone line communication device, and RS-serial communication; a wireless network such as a mobile communication network, a wireless LAN (WLAN), Wi-Fi, and Bluetooth; or a combination of the wired and wireless networks. For example, the communication network may include a local area network (LAN) and a wide area network (WAN).

A computing device based on the illustrative embodiments described herein may be implemented using hardware and/or software configured to interact with a user, including a user device, a user interface (UI) device, a user terminal, or a client device. For example, the computing device may include a portable computing device such as a laptop computer. Additionally or alternatively, the computing device may include a Personal Digital Assistants (PDA), a tablet PC, a game console, a wearable device, an Internet of Things (IoT) device, a virtual reality (VR) device, and an augmented reality (AR) device but the present disclosure is not limited thereto. The computing device may further include other types of devices configured to interact with the user. In addition, the computing device may include a portable communication device (e.g., a mobile phone, a smartphone, or a wireless cellular phone) suitable for wireless communication over a network, such as a mobile communication network. The computing device may be configured to communicate wirelessly with a network server using wireless communication technologies and/or protocols such as Radio Frequency (RF), Microwave Frequency (MWF), and/or Infrared Ray Frequency (IRF).

Various embodiments of the present disclosure, including specific structural and functional details, are illustrative in nature. Accordingly, the embodiments of the present disclosure are not limited to those described above and may be implemented in various other forms. In addition, the terms used in the present disclosure are intended for describing part of embodiments and should not be construed as limiting the embodiments. For example, singular words and the descriptions above may be construed to include plural forms unless the context dictates otherwise.

Unless defined otherwise, terms used in the present disclosure, including technical or scientific terms, may convey the same meaning understood generally by those skilled in the art to which the present disclosure belongs. Among the terms used in the present disclosure, commonly used terms, such as those defined in ordinary dictionaries, should be interpreted to convey the same meaning in the context of related technology.

## Claims

1. A mixer simulation device for secondary battery production, the mixer simulation device (100) comprising:
a) a memory (1120) configured to store at least one instruction; and
b) at least one processor configured to execute the at least one instruction stored in the memory (1120),
c) wherein the at least one instruction includes instructions for:
c1) executing (S1010) a software module apparatus operating unit (140, 210) comprising a virtual mixer model apparatus related to secondary battery production;
c2) executing (S1010) a software module facility operating unit (130) comprising a plurality of adjustment parameters for determining operation of the virtual mixer model apparatus and quality information related to a quality of a material produced by the virtual mixer model apparatus;
c3) obtaining (S1020) at least one of first user condition information or first user action information input through at least one of the software module facility operating unit (130) or the virtual mixer model apparatus;
c4) determining (S1030) an operation of the virtual mixer model apparatus based on at least one of the obtained first user condition information or first user action information; and
c5) executing (S1040) an operation of measuring, mixing, and transferring a plurality of raw materials related to the virtual mixer model apparatus based on the determined operation.

2. The mixer simulation device of claim 1, wherein the at least one instruction further includes instructions for executing a training scenario based on an operation process of the virtual mixer model apparatus, and
displaying guide information for manipulating the facility operating unit (130) according to the training scenario.

3. The mixer simulation device of claim 2, wherein the training scenario includes at least one of a raw material name and setting value input training, an insulation liquid setting training, a binder solution setting training, a pre-dispersion solution setting training, a slurry setting training, a tank cleaning training, or a troubleshooting training.

4. The mixer simulation device of claim 3, wherein the insulation liquid setting training includes at least one of a detail training for semi-automatic setting of an insulation liquid, a detail training for semi-automatic mixing of an insulation liquid, a detail training for automatic mixing of an insulation liquid, or a detail training for transferring an insulation liquid.

5. The mixer simulation device of claim 3 or 4, wherein the binder solution setting training includes at least one of a detail training for semi-automatic setting of a binder solution, a detail training for semi-automatic mixing of a binder solution, a detail training for automatic mixing of a binder solution, or a detail training for transferring a binder solution.

6. The mixer simulation device of any one of claims 3 to 5, wherein the pre-dispersion solution setting training includes at least one of a detail training for semi-automatic setting of a pre-dispersion solution, a detail training for semi-automatic mixing of a pre-dispersion solution, a detail training for automatic mixing of a pre-dispersion solution, or a detail training for transferring a pre-dispersion solution.

7. The mixer simulation device of any one of claims 3 to 6, wherein the slurry setting training includes at least one of a detail training for semi-automatic setting of a slurry, a detail training for semi-automatic mixing a slurry, a detail training for automatic mixing of a slurry, or a detail training for transferring a slurry.

8. The mixer simulation device of any one of claims 3 to 7, wherein the tank cleaning training includes at least one of a detail training for inputting setting values or a detail training for semi-automatic cleaning.

9. The mixer simulation device of any one of claims 3 to 8, wherein the troubleshooting training includes at least one of a valve alarm scenario, an overflow scenario, a binder solution exchange scenario, a slurry transfer scenario, an active material type exchange scenario, a setting value check scenario, a main mixer overheating scenario, or a pipe clogging scenario.

10. The mixer simulation device of claim 9, wherein the at least one instruction further includes instructions for executing at least one trouble scenario of the valve alarm scenario, the overflow scenario, the binder solution exchange scenario, the slurry transfer scenario, the active material type exchange scenario, the setting value check scenario, the main mixer overheating scenario, or the pipe clogging scenario,
changing at least partial area of the virtual mixer model apparatus or the facility operating unit (130) to an abnormal range based on the executed trouble scenario;
obtaining at least one of second user action information or second user condition information through at least one of the virtual mixer model apparatus or the facility operating unit (130); and
changing at least one of the virtual mixer model apparatus or the facility operating unit (130), having been changed to the abnormal range, to a normal range based on at least one of the obtained second user action information or second user condition information.

11. A simulation method (S1000) of mixer for secondary battery production, the simulation method being performed by at least one processor and comprising:
executing (S1010) a software module apparatus operating unit (140, 210) comprising a virtual mixer model apparatus related to secondary battery production;
executing (S1010) a software module facility operating unit (130) comprising a plurality of adjustment parameters for determining operation of the virtual mixer model apparatus and quality information related to a quality of a material produced by the virtual mixer model apparatus;
obtaining (S1020) at least one of first user condition information or first user action information input through at least one of the software module facility operating unit (130) or the virtual mixer model apparatus;
determining (S1030) an operation of the virtual mixer model apparatus based on at least one of the obtained first user condition information or first user action information; and
executing (S1040) an operation of measuring, mixing, and transferring a plurality of raw materials related to the virtual mixer model apparatus based on the determined operation.

12. The simulation method of claim 11, further comprising:
executing a training scenario based on an operation process of the virtual mixer model apparatus, and
displaying guide information for manipulating the facility operating unit (130) according to the training scenario.

13. The simulation method of claim 12, wherein the training scenario includes at least one of a raw material name and setting value input training, an insulation liquid setting training, a binder solution setting training, a pre-dispersion solution setting training, a slurry setting training, a tank cleaning training, or a troubleshooting training.

14. The simulation method of claim 13, wherein the troubleshooting training includes at least one of a valve alarm scenario, an overflow scenario, a binder solution exchange scenario, a slurry transfer scenario, an active material type exchange scenario, a setting value check scenario, a main mixer overheating scenario, or a pipe clogging scenario.

15. A computer program stored in a computer-readable medium provided to execute the method according to any one of claims 11 to 14 in a computer.

## Patentansprüche

1. Mischersimulationseinrichtung zur Sekundärbatterieproduktion, wobei die Mischersimulationseinrichtung (100) Folgendes umfasst:
a) einen Speicher (1120), der konfiguriert ist, um mindestens eine Anweisung zu speichern; und
b) mindestens einen Prozessor, der konfiguriert ist, um die mindestens eine Anweisung, die in dem Speicher (1120) gespeichert ist, auszuführen,
c) wobei die mindestens eine Anweisung Anweisungen beinhaltet zum:
c1) Ausführen (S1010) einer Softwaremodulvorrichtungsbetriebseinheit (140, 210), die eine virtuelle Mischermodellvorrichtung umfasst, die sich auf die Sekundärbatterieproduktion bezieht;
c2) Ausführen (S1010) einer Softwaremodulanlagenbetriebseinheit (120, 130), die eine Vielzahl von Einstellungsparametern zum Bestimmen des Betriebs der virtuellen Mischermodellvorrichtung und Qualitätsinformationen, die sich auf eine Qualität eines Materials beziehen, das durch die virtuelle Mischermodellvorrichtung produziert wird, umfasst;
c3) Erhalten (S1020) mindestens einer von ersten Benutzerbedingungsinformationen oder ersten Benutzeraktionsinformationen, die durch mindestens eine von der Softwaremodulanlagenbetriebseinheit (120, 130) oder der virtuellen Mischermodellvorrichtung eingegeben werden;
c4) Bestimmen (S1030) eines Betriebs der virtuellen Mischermodellvorrichtung basierend auf mindestens einer von den erhaltenen ersten Benutzerbedingungsinformationen oder ersten Benutzeraktionsinformationen; und
c5) Ausführen (S1040) eines Betriebs des Messens, Mischens und Transferierens einer Vielzahl von Rohmaterialien, die sich auf die virtuelle Mischermodellvorrichtung beziehen, basierend auf dem bestimmten Betrieb.

2. Mischersimulationseinrichtung nach Anspruch 1, wobei die mindestens eine Anweisung ferner Anweisungen zum Ausführen eines Trainingsszenarios basierend auf einem Betriebsprozess der virtuellen Mischermodellvorrichtung beinhaltet, und
Anzeigen von Anleitungsinformationen zum Betätigen der Anlagenbetriebseinheit (120, 130) gemäß dem Trainingsszenario.

3. Mischersimulationseinrichtung nach Anspruch 2, wobei das Trainingsszenario mindestens eines von einem Rohmaterialnamen- und Einstellungswerteingabetraining, einem Isolationsflüssigkeitseinstellungstraining, einem Bindemittellösungseinstellungstraining, einem Vordispersionslösungseinstellungstraining, einem Aufschlämmungseinstellungstraining, einem Tankreinigungstraining oder einem Problembehebungstraining beinhaltet.

4. Mischersimulationseinrichtung nach Anspruch 3, wobei das Isolationsflüssigkeitseinstellungstraining mindestens eines von einem Detailtraining zum halbautomatischen Einstellen einer Isolationsflüssigkeit, einem Detailtraining zum halbautomatischen Mischen einer Isolationsflüssigkeit, einem Detailtraining zum automatischen Mischen einer Isolationsflüssigkeit oder einem Detailtraining zum Tranferieren einer Isolationsflüssigkeit beinhaltet.

5. Mischersimulationseinrichtung nach Anspruch 3 oder 4, wobei das Bindemittellösungseinstellungstraining mindestens eines von einem Detailtraining zum halbautomatischen Einstellen einer Bindemittellösung, einem Detailtraining zum halbautomatischen Mischen einer Bindemittellösung, einem Detailtraining zum automatischen Mischen einer Bindemittellösung oder einem Detailtraining zum Tranferieren einer Bindemittellösung beinhaltet.

6. Mischersimulationseinrichtung nach einem der Ansprüche 3 bis 5, wobei das Vordispersionslösungseinstellungstraining mindestens eines von einem Detailtraining zum halbautomatischen Einstellen einer Vordispersionslösung, einem Detailtraining zum halbautomatischen Mischen einer Vordispersionslösung, einem Detailtraining zum automatischen Mischen einer Vordispersionslösung oder einem Detailtraining zum Tranferieren einer Vordispersionslösung beinhaltet.

7. Mischersimulationseinrichtung nach einem der Ansprüche 3 bis 6, wobei das Aufschlämmungseinstellungstraining mindestens eines von einem Detailtraining zum halbautomatischen Einstellen einer Aufschlämmung, einem Detailtraining zum halbautomatischen Mischen einer Aufschlämmung, einem Detailtraining zum automatischen Mischen einer Aufschlämmung oder einem Detailtraining zum Tranferieren einer Aufschlämmung beinhaltet.

8. Mischersimulationseinrichtung nach einem der Ansprüche 3 bis 7, wobei das Tankreinigungstraining mindestens eines von einem Detailtraining zum Eingeben von Einstellungswerten oder einem Detailtraining zum halbautomatischen Reinigen beinhaltet.

9. Mischersimulationseinrichtung nach einem der Ansprüche 3 bis 8, wobei das Problembehebungstraining mindestens eines von einem Ventilalarmszenario, einem Überlaufszenario, einem Bindemittellösungsaustauschszenario, einem Aufschlämmungstransferszenario, einem Aktivmaterialtypaustauschszenario, einem Einstellungswertprüfszenario, einem Hauptmischerüberhitzungsszenario oder einem Rohrverstopfungsszenario beinhaltet.

10. Mischersimulationseinrichtung nach Anspruch 9, wobei die mindestens eine Anweisung ferner Anweisungen zum Ausführen mindestens eines Problemszenarios des Ventilalarmszenarios, des Überlaufszenarios, des Bindemittellösungsaustauschszenarios, des Aufschlämmungstransferszenarios, des Aktivmaterialtypaustauschszenarios, des Einstellungswertprüfszenarios, des Hauptmischerüberhitzungsszenarios oder des Rohrverstopfungsszenarios beinhaltet,
Ändern mindestens eines Teilbereichs der virtuellen Mischermodellvorrichtung oder der Anlagenbetriebseinheit (120, 130) in einen anormalen Bereich basierend auf dem ausgeführten Problemszenario;
Erhalten mindestens einer von zweiten Benutzeraktionsinformationen oder zweiten Benutzerbedingungsinformationen durch mindestens eine von der virtuellen Mischermodellvorrichtung oder der Anlagenbetriebseinheit (120, 130); und
Ändern mindestens einer von der virtuellen Mischermodellvorrichtung oder der Anlagenbetriebseinheit (120, 130), die in den anormalen Bereich geändert wurde, in einen normalen Bereich basierend auf mindestens einer von den erhaltenen zweiten Benutzeraktionsinformationen oder zweiten Benutzerbedingungsinformationen.

11. Simulationsverfahren (S1000) eines Mischers zur Sekundärbatterieproduktion, wobei das Simulationsverfahren durch mindestens einen Prozessor durchgeführt wird und Folgendes umfasst:
Ausführen (S1010) einer Softwaremodulvorrichtungsbetriebseinheit (140, 210), die eine virtuelle Mischermodellvorrichtung umfasst, die sich auf die Sekundärbatterieproduktion bezieht;
Ausführen (S1010) einer Softwaremodulanlagenbetriebseinheit (120, 130), die eine Vielzahl von Einstellungsparametern zum Bestimmen des Betriebs der virtuellen Mischermodellvorrichtung und Qualitätsinformationen, die sich auf eine Qualität eines Materials beziehen, das durch die virtuelle Mischermodellvorrichtung produziert wird, umfasst;
Erhalten (S1020) mindestens einer von ersten Benutzerbedingungsinformationen oder ersten Benutzeraktionsinformationen, die durch mindestens eine von der Softwaremodulanlagenbetriebseinheit (120, 130) oder der virtuellen Mischermodellvorrichtung eingegeben werden;
Bestimmen (S1030) eines Betriebs der virtuellen Mischermodellvorrichtung basierend auf mindestens einer von den erhaltenen ersten Benutzerbedingungsinformationen oder ersten Benutzeraktionsinformationen; und
Ausführen (S1040) eines Betriebs des Messens, Mischens und Transferierens einer Vielzahl von Rohmaterialien, die sich auf die virtuelle Mischermodellvorrichtung beziehen, basierend auf dem bestimmten Betrieb.

12. Simulationsverfahren nach Anspruch 11, ferner umfassend:
Ausführen eines Trainingsszenarios basierend auf einem Betriebsprozess der virtuellen Mischermodellvorrichtung, und
Anzeigen von Anleitungsinformationen zum Betätigen der Anlagenbetriebseinheit (120, 130) gemäß dem Trainingsszenario.

13. Simulationsverfahren nach Anspruch 12, wobei das Trainingsszenario mindestens eines von einem Rohmaterialnamen- und Einstellungswerteingabetraining, einem Isolationsflüssigkeitseinstellungstraining, einem Bindemittellösungseinstellungstraining, einem Vordispersionslösungseinstellungstraining, einem Aufschlämmungseinstellungstraining, einem Tankreinigungstraining oder einem Problembehebungstraining beinhaltet.

14. Simulationsverfahren nach Anspruch 13, wobei das Problembehebungstraining mindestens eines von einem Ventilalarmszenario, einem Überlaufszenario, einem Bindemittellösungsaustauschszenario, einem Aufschlämmungstransferszenario, einem Aktivmaterialtypaustauschszenario, einem Einstellungswertprüfszenario, einem Hauptmischerüberhitzungsszenario oder einem Rohrverstopfungsszenario beinhaltet.

15. Computerprogramm, das in einem computerlesbaren Medium gespeichert ist, das bereitgestellt ist, um das Verfahren nach einem der Ansprüche 11 bis 14 in einem Computer auszuführen.

## Revendications

1. Dispositif de simulation de mélangeur pour la production de batteries secondaires, ledit dispositif de simulation de mélangeur (100) comprenant :
a) une mémoire (1120) configurée pour stocker au moins une instruction ; et
b) au moins un processeur configuré pour exécuter ladite au moins une instruction stockée en mémoire (1120),
c) ladite au moins une instruction comprenant des instructions pour :
c1) exécuter (S1010) une unité de commande de dispositif à module logiciel (140, 210) comprenant un dispositif de modèle de mélangeur virtuel associé à la production de batteries secondaires ;
c2) exécuter (S1010) une unité de commande d'installation à module logiciel (130) comprenant une pluralité de paramètres de réglage pour déterminer une opération du dispositif de modèle de mélangeur virtuel et des informations de qualité relatives à la qualité d'un matériel produit par le dispositif de modèle de mélangeur virtuel ;
c3) obtenir (S1020) des premières informations d'état utilisateur et/ou des premières informations d'action d'utilisateur entrées au moyen de l'unité de commande d'installation à module logiciel (130) et/ou du dispositif de modèle de mélangeur virtuel ;
c4) déterminer (S1030) une opération du dispositif de modèle de mélangeur virtuel sur la base des premières informations d'état d'utilisateur et/ou des premières informations d'action d'utilisateur obtenues ; et
c5) exécuter (S1040) une opération de mesure, de mélange et de transfert d'une pluralité de matériels bruts associés au dispositif de modèle de mélangeur virtuel sur la base de l'opération déterminée.

2. Dispositif de simulation de mélangeur selon la revendication 1, où ladite au moins une instruction comprend en outre des instructions pour l'exécution d'un scénario d'apprentissage sur la base d'un processus d'actionnement du dispositif de modèle de mélangeur virtuel, et l'affichage d'informations de guidage pour manipuler l'unité de commande d'installation (130) conformément au scénario d'apprentissage.

3. Dispositif de simulation de mélangeur selon la revendication 2, où le scénario d'apprentissage comprend un apprentissage d'entrée de nom de matériel brut et de valeur de réglage et/ou un apprentissage de réglage de liquide d'isolation et/ou un apprentissage de réglage de solution de liant et/ou un apprentissage de réglage de solution de pré-dispersion et/ou un apprentissage de réglage de suspension et/ou un apprentissage de nettoyage de réservoir et/ou un apprentissage de résolution de problème.

4. Dispositif de simulation de mélangeur selon la revendication 3, où l'apprentissage de réglage de liquide d'isolation comprend un apprentissage détaillé pour le réglage semi-automatique d'un liquide d'isolation et/ou un apprentissage détaillé pour le mélange semi-automatique d'un liquide d'isolation et/ou un apprentissage détaillé pour le mélange automatique d'un liquide d'isolation et/ou un apprentissage détaillé pour le transfert d'un liquide d'isolation.

5. Dispositif de simulation de mélangeur selon la revendication 3 ou la revendication 4, où l'apprentissage de réglage d'une solution de liant comprend un apprentissage détaillé pour le réglage semi-automatique d'une solution de liant et/ou un apprentissage détaillé pour le mélange semi-automatique d'une solution de liant et/ou un apprentissage détaillé pour le mélange automatique d'une solution de liant et/ou un apprentissage détaillé pour le transfert d'une solution de liant.

6. Dispositif de simulation de mélangeur selon l'une des revendications 3 à 5, où l'apprentissage de réglage de solution de pré-dispersion comprend un apprentissage détaillé pour le réglage semi-automatique d'une solution de pré-dispersion et/ou un apprentissage détaillé pour le mélange semi-automatique d'une solution de pré-dispersion et/ou un apprentissage détaillé pour le mélange automatique d'une solution de pré-dispersion et/ou un apprentissage détaillé pour le transfert d'une solution de pré-dispersion.

7. Dispositif de simulation de mélangeur selon l'une des revendications 3 à 6, où l'apprentissage de réglage de suspension comprend un apprentissage détaillé pour le réglage semi-automatique d'une suspension et/ou un apprentissage détaillé pour le mélange semi-automatique d'une suspension et/ou un apprentissage détaillé pour le mélange automatique d'une suspension et/ou un apprentissage détaillé pour le transfert d'une suspension.

8. Dispositif de simulation de mélangeur selon l'une des revendications 3 à 7, où l'apprentissage de nettoyage de réservoir comprend un apprentissage détaillé pour entrer les valeurs de réglage et/ou un apprentissage détaillé pour le nettoyage semi-automatique.

9. Dispositif de simulation de mélangeur selon l'une des revendications 3 à 8, où l'apprentissage de résolution de problème comprend un scénario d'alarme de vanne et/ou un scénario de débordement et/ou un scénario de remplacement de solution de liant et/ou un scénario de transfert de suspension et/ou un scénario de remplacement de type de matériel actif et/ou un scénario de contrôle de valeur de réglage et/ou un scénario de surchauffe de mélangeur principal et/ou un scénario d'obstruction de conduite.

10. Dispositif de simulation de mélangeur selon la revendication 9, où ladite au moins une instruction comprend en outre des instructions pour l'exécution d'au moins un scénario de défaillance entre le scénario d'alarme de vanne, le scénario de débordement, le scénario de remplacement de solution de liant, le scénario de transfert de suspension, le scénario de remplacement de type de matériel actif, le scénario de contrôle de valeur de réglage, le scénario de surchauffe de mélangeur principal et le scénario d'obstruction de conduite,
la modification d'au moins une zone partielle du dispositif de modèle de mélangeur virtuel ou de l'unité de commande d'installation (130) vers une plage anormale sur la base du scénario de défaillance exécuté ;
l'obtention de deuxièmes informations d'action d'utilisateur et/ou de deuxièmes informations d'état d'utilisateur au moyen du dispositif de modèle de mélangeur virtuel et/ou de l'unité de commande d'installation (130) ; et
la modification du dispositif de modèle de mélangeur virtuel et/ou de l'unité de commande d'installation (130), ayant été modifiés vers une plage anormale, vers une plage normale sur la base des deuxièmes informations d'action d'utilisateur et/ou des deuxièmes informations d'état d'utilisateur obtenues.

11. Procédé de simulation (S1000) de mélangeur pour la production de batteries secondaires, ledit procédé de simulation étant exécuté par au moins un processeur et comprenant :
l'exécution (S1010) d'une unité de commande de dispositif à module logiciel (140, 210) comprenant un dispositif de modèle de mélangeur virtuel associé à la production de batteries secondaires ;
l'exécution (S1010) d'une unité de commande d'installation à module logiciel (130) comprenant une pluralité de paramètres de réglage pour déterminer une opération du dispositif de modèle de mélangeur virtuel et des informations de qualité relatives à la qualité d'un matériel produit par le dispositif de modèle de mélangeur virtuel ;
l'obtention (S1020) de premières informations d'état utilisateur et/ou de premières informations d'action d'utilisateur entrées au moyen de l'unité de commande d'installation à module logiciel (130) et/ou du dispositif de modèle de mélangeur virtuel ;
la détermination (S1030) d'une opération du dispositif de modèle de mélangeur virtuel sur la base des premières informations d'état d'utilisateur et/ou des premières informations d'action d'utilisateur obtenues ; et
l'exécution (S1040) d'une opération de mesure, de mélange et de transfert d'une pluralité de matériels bruts associés au dispositif de modèle de mélangeur virtuel sur la base de l'opération déterminée.

12. Procédé de simulation selon la revendication 11, comprenant en outre :
l'exécution d'un scénario d'apprentissage sur la base d'un processus d'actionnement du dispositif de modèle de mélangeur virtuel, et
l'affichage d'informations de guidage pour manipuler l'unité de commande d'installation (130) conformément au scénario d'apprentissage.

13. Procédé de simulation selon la revendication 12, où le scénario d'apprentissage comprend un apprentissage d'entrée de nom de matériel brut et de valeur de réglage et/ou un apprentissage de réglage de liquide d'isolation et/ou un apprentissage de réglage de solution de liant et/ou un apprentissage de réglage de solution de pré-dispersion et/ou un apprentissage de réglage de suspension et/ou un apprentissage de nettoyage de réservoir et/ou un apprentissage de résolution de problème.

14. Procédé de simulation selon la revendication 13, où l'apprentissage de résolution de problème comprend un scénario d'alarme de vanne et/ou un scénario de débordement et/ou un scénario de remplacement de solution de liant et/ou un scénario de transfert de suspension et/ou un scénario de remplacement de type de matériel actif et/ou un scénario de contrôle de valeur de réglage et/ou un scénario de surchauffe de mélangeur principal et/ou un scénario d'obstruction de conduite.

15. Programme informatique enregistré sur un support lisible par ordinateur, prévu pour exécuter le procédé selon l'une des revendications 11 à 14 sur un ordinateur.
